# EUROPÄISCHE PATENTANMELDUNG

(11) **EP 4 455 237 A1**
(43) Veröffentlichungstag der Anmeldung: **30.10.2024**
(21) Anmeldenummer: 24168624.5
(22) Anmeldetag: 05.04.2024
(51) Int. Cl.: C09J 5/00, C08K 5/3472, C09J 7/10, C09J 7/30, C08K 3/24, C08K 5/098, C08K 5/3445, C08K 5/42, C08K 5/43

(54) **KLEBEBAND, VERKLEBTER VERBUND UND VERFAHREN ZUM ELEKTRISCHEN LÖSEN DES VERKLEBTEN VERBUNDES**

(30) Priorität: 25.04.2023 EP 23169916
(71) Anmelder: TESA SE, 22848 Norderstedt (DE)
(72) Erfinder: KRAWINKEL, Thorsten, Norderstedt (DE); WANG, Shuang, Norderstedt (DE); GRAEF, Hans-Peter, Norderstedt (DE); MOON, Sie-Seong, Norderstedt (DE)
(74) Vertreter: tesa SE

(57) **Zusammenfassung**

Die Erfindung betrifft ein Klebeband, einen verklebten Verbund, ein Verfahren zum elektrischen Lösen des verklebten Verbundes und die Verwendung des Klebebands zur Verklebung von Bauteilen in elektronischen Geräten, Automobilen, medizinischen Geräten und zahnmedizinischen Geräten.

Das Klebeband umfasst wenigstens folgende Schichten:
· Eine Klebemasseschicht D, wobei die Klebemasseschicht D wenigstens ein Elektrolyt enthält und geschäumt ist, wobei die Schäumung mittels Mikroballons hergestellt ist, wobei die Mikroballons an ihrer Oberfläche eine Schicht aus Silikat oder Alumosilikat aufweisen.

## Beschreibung

Die Erfindung betrifft ein Klebeband, einen verklebten Verbund, ein Verfahren zum elektrischen Lösen des verklebten Verbundes und die Verwendung des Klebebands zur Verklebung von Bauteilen in elektronischen Geräten, Automobilen, medizinischen Geräten und zahnmedizinischen Geräten.

Die meisten Klebebandlösungen sind nicht oder nicht ohne Beschädigung der Substrate ablösbar. Neuerdings besteht ein erhöhtes Interesse an "Debonding-on-Demand"-Funktionalitäten, welche aufgrund von Umweltgesetzen bzw. des Bewusstseins der Endkunden für Nachhaltigkeit und einem steigenden Kostendruck bei der Herstellung zustande kommen. Die Anwendungsszenarien für Debonding-Prozesse werden in Nacharbeiten, Reparieren, Recycling und Verarbeitungshilfen klassifiziert.

Die Debonding-Technologien zielen darauf, ein kohäsives Spalten der Klebstoffschicht oder ein adhäsives Ablösen der Klebstoffschicht vom Substrat zu erzielen. Während ersteres eine Reinigung des Substrats vor einer Wiederverklebung erfordert, kommt letzteres ohne eine solche aus.

Adhäsiv lösende Technologien, die die geforderte hohe und dauerhaft zuverlässige Verklebungsfestigkeit garantieren, sind jedoch in der Regel schwieriger zu verwirklichen oder dauern in der Anwendung sehr lange, wie z.B. das Ablösen mittels eines unterwandernden Lösemittels.

So sind derzeit insbesondere in der Nacharbeit oder Reparatur von elektronischen Geräten, wie z.B. Smartphones und Tablet-Computern, vorwiegend kohäsiv spaltende Klebverbindungen im Einsatz, vielfach ausgeführt als Haftklebebänder, die über eine Temperaturerhöhung so weit in ihrer Kohäsion gemindert werden, dass eine manuelle, kohäsive Trennung der Verklebung erfolgen kann. Umfangreiche Nacharbeiten zur Vorbereitung der mit Klebstoffresten verunreinigten Substratoberfläche für eine Wiederverklebung sind die Folge.

Neben wärmevermittelten Trennverfahren werden elektrische Trennverfahren diskutiert. So offenbart beispielsweise die EP 3363873 B1 ein solches elektrisches Trennverfahren bzw. ein entsprechendes doppelseitiges Klebeband, welches eine elektrische Trennung von miteinander verklebten Substraten ermöglicht. Hierdurch soll insbesondere die Trennung von rigiden Substraten ermöglicht werden. Das in der EP 3363873 B1 vorgeschlagene Klebeband weist hierzu eine mittig angeordnete elektrisch leitfähige Schicht umgeben von zwei Klebemasseschichten auf, von denen eine Klebeschicht ein Elektrolyt enthält und hierdurch elektrisch von der leitfähigen Schicht oder einem elektrisch leitfähigen Substrat gelöst werden kann.

Wichtig für die Anwendung von Klebebändern, insbesondere in elektronischen Geräten ist häufig die Schockbeständigkeit, da die verklebten Bauteile auch bei einem Fall des mobilen Gerätes nicht gelöst werden dürfen.

Um die Schockbeständigkeit der Klebebänder zu erhöhen, werden die Klebmassen oftmals geschäumt, insbesondere durch die Zugabe expandierbarer Mikroballons.

Allerdings werden durch die Zugabe derartiger Additive, wie expandierbarer Mikroballons, die Eigenschaften, wie insbesondere die Klebkraft, der Klebemasse beeinflusst. Auch durch die Schäumung selbst wird ein von der ungeschäumten Masse verschiedenes Eigenschaftsprofil erhalten. Dies betrifft insbesondere die Dichte, Festigkeit und die Bewegungsmöglichkeiten von kleineren Molekülen in der Klebemasse, wobei insbesondere der zuletzt genannte Aspekt die elektrische Ablösbarkeit der Klebemasse beeinflusst.

Der vorliegenden Erfindung liegt daher die Aufgabe zugrunde, ein Klebeband bereitzustellen, wobei sich das Klebeband von wenigstens einem Substrat ohne Rückstände wieder ablösen lassen soll und eine exzellente Schockbeständigkeit (Schlägzähigkeit) aufweisen soll. Gleichzeitig soll die Klebkraft des Klebebandes an die zu verklebenden Substrate vor dem Lösen nicht negativ beeinträchtigt sein.

Die Aufgabe wird erfindungsgemäß durch das Klebeband gemäß Anspruch 1 gelöst.

Das erfindungsgemäße Klebeband umfasst wenigstens folgende Schichten:
- Eine Klebemasseschicht D, wobei die Klebemasseschicht D wenigstens ein Elektrolyt enthält und geschäumt ist, wobei die Schäumung mittels Mikroballons hergestellt ist, wobei die Mikroballons an ihrer Oberfläche eine Schicht aus Silikat oder Alumosilikat aufweisen.

Mittels des enthaltenen Elektrolyten ist die Klebemasseschicht D elektrisch ablösbar.

Überraschenderweise hat sich herausgestellt, dass die Klebemasseschicht D auch dann elektrisch ablösbar ist, wenn sie mittels Mikroballons geschäumt ist und somit Mikroballons enthält. Hierzu ist wesentlich, dass die Mikroballons an ihrer Oberfläche eine Schicht aus Silikat oder Alumosilikat aufweisen. Hierdurch ergibt sich eine hohe Schockbeständigkeit des Klebebandes und eines verklebten Verbundes umfassend das Klebeband und hierüber miteinander verklebte Substrate. Gleichzeitig weist das Klebeband trotz der enthaltenen Mikroballons eine hohe Klebkraft auf.

Somit ist es mit der vorliegenden Erfindung gelungen, ein Klebeband bereitzustellen, welches sich einfach und schnell wieder ablösen lässt und somit zur Nachhaltigkeit beiträgt, während die das Klebeband enthaltenden Artikel eine erhöhte Langlebigkeit, auch im Fall einer unerwünschten Krafteinwirkung durch z.B. einen Sturz, aufweisen.

Das erfindungsgemäße Klebeband ist bevorzugt ein doppelseitiges Klebeband. Der Einfachheit halber wird das erfindungsgemäße Klebeband im Rahmen der vorliegenden Erfindung auch in den doppelseitigen Ausführungsformen als "Klebeband" bezeichnet.

Die vorliegende Erfindung betrifft ein Klebeband, welches in beliebigen Konfektionsformen vorliegen kann, wobei Klebebandrollen bevorzugt sind. Das Klebeband, insbesondere in Bahnform, kann entweder in Form einer Rolle, also in Form einer archimedischen Spirale auf sich selbst aufgerollt, hergestellt werden oder als Klebestreifen, wie er zum Beispiel in Form von Stanzlingen erhalten wird.

Das erfindungsgemäße Klebeband liegt insbesondere in Bahnform vor. Unter einer Bahn wird ein Objekt verstanden, dessen Länge (Erstreckung in x-Richtung) um ein Vielfaches größer ist als seine Breite (Erstreckung in y-Richtung) und die Breite entlang der gesamten Länge in etwa vorzugsweise genau gleichbleibend ausgebildet ist.

Der allgemeine Ausdruck "Klebeband", synonym auch "Klebestreifen" genannt, umfasst im Sinne dieser Erfindung alle flächigen Gebilde, wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband weist neben der Längsausdehnung (x-Richtung) und Breitenausdehnung (y-Richtung) auch eine senkrecht zu beiden Ausdehnungen verlaufende Dicke (z-Richtung) auf, wobei die Breitenausdehnung und Längsausdehnung um ein Vielfaches größer sind als die Dicke. Die Dicke ist über die gesamte durch Länge und Breite bestimmte Flächenausdehnung der Klebebänder möglichst gleich, vorzugsweise exakt gleich.

Die Ausführungen gelten analog für die Trägerschicht(en), die als Bestandteil des Klebebandes gemäß einiger bevorzugter Ausführungsformen eine Schicht in x- und y-Richtung ausbildet bzw. ausbilden.

Es versteht sich, dass die einzelnen Schichten entlang der z-Richtung aufeinander angeordnet sind.

Sämtliche Ausführungen der Beschreibung gelten für das erfindungsgemäße Klebeband, das erfindungsgemäße Verfahren zur Herstellung des Klebebandes, den erfindungsgemäßen verklebten Verbund sowie das Verfahren zum elektrischen Lösen des Verbundes und die Verwendung des erfindungsgemäßen Klebebandes.

Von der Erfindung sind zudem sämtliche Merkmale, die Gegenstände von jeglichen abhängigen Patentansprüchen sind, umfasst. Ferner sind von der Erfindung Kombinationen einzelner Merkmale miteinander und hierbei auch unterschiedlicher Bevorzugungsstufen umfasst. Somit ist von der Erfindung beispielsweise die Kombination eines ersten als "bevorzugt" gekennzeichneten Merkmals mit einem zweiten als "besonders bevorzugt" gekennzeichneten Merkmals umfasst. Hierbei sind auch im Rahmen von "Ausführungsformen" bezeichnete Gegenstände ebenfalls unterschiedlicher Bevorzugungsstufen mit umfasst.

Die Klebemasseschicht D enthält wenigstens ein Elektrolyt.

Unter einem "Elektrolyt" wird vorliegend eine chemische Verbindung verstanden, "die im festen, flüssigen oder gelösten Zustand in Ionen dissoziiert ist und die sich unter dem Einfluss eines elektrischen Feldes gerichtet bewegt", wie unter dem Wikipedia-Eintrag "Elektrolyt" vom 04.01.2023 bzw. entsprechend in Carl H. Hamann, Wolf Vielstich: Elektrochemie I: Elektrolytische Leitfähigkeit, Potentiale, Phasengrenzen. 2. Auflage. VCH Verlagsgesellschaft mbH, Oldenburg/ Bonn 1985, ISBN 3-527-21100-4, S. 4., aufgeführt.

Bevorzugt ist der Elektrolyt der Klebemasseschicht D ausgewählt aus der Gruppe bestehend aus ionischen Flüssigkeiten und Metallsalzen, wobei ionische Flüssigkeiten besonders bevorzugt sind.

Insbesondere durch eine oder mehrere ionische Flüssigkeiten als Elektrolyt lässt sich das Klebeband auf einfache Weise wieder ablösen ohne dass die Klebeigenschaften des Klebebandes negativ beeinträchtigt sind. Ionische Flüssigkeiten haben dabei den Vorteil, dass sie sich gut und homogen in der Polymermatrix von Klebemassen verteilen lassen und das Wiederablösen schneller funktioniert als mit anderen Elektrolyten.

Ferner sind die Bestandteile von ionischen Flüssigkeiten, insbesondere bei Raumtemperatur, nicht flüchtig. Ionische Flüssigkeiten sind zudem vergleichsweise hitzestabil und nicht brennbar sowie chemisch vergleichsweise stabil.

Ionische Flüssigkeiten sind im Rahmen der vorliegenden Erfindung Salze, die bei Raumtemperatur, also 23 °C, flüssig sind. Ionische Flüssigkeiten enthalten dementsprechend Anionen und Kationen.

Ionische Flüssigkeiten sind daher als Elektrolyt im Rahmen des erfindungsgemäßen Trennverfahrens bzw. Verfahrens zum elektrischen Lösen besonders gut geeignet.

Wenn eine Spannung angelegt wird, wandern die Anionen zur anodischen Seite und die Kationen zur kathodischen Seite. Hierdurch kommt es zu einer Absenkung der Klebkraft der die ionische Flüssigkeit enthaltenden Klebemasseschicht, hier Schicht D, an wenigstens eine der benachbarten Schichten, wodurch eine adhäsive Spaltung zwischen der Klebemasseschicht D und wenigstens einer benachbarten Schicht erzielt wird.

Im Rahmen der vorliegenden Erfindung sind prinzipiell alle ionischen Flüssigkeiten geeignet.

Die im Rahmen der vorliegenden Erfindung verwendeten ionischen Flüssigkeiten enthalten wenigstens ein Anion und wenigstens ein Kation. Hierbei ist es auch denkbar, dass die ionische Flüssigkeit zwei oder mehr Typen an Anionen und/oder zwei oder mehr Typen an Kationen umfasst. Ferner ist es denkbar, dass der Klebemasseschicht D zwei oder mehrere verschiedene ionische Flüssigkeiten zugegeben werden bzw. die Klebemasseschicht D dann zwei oder mehrere verschiedene ionische Flüssigkeiten enthält.

Bevorzugt ist das Anion der ionischen Flüssigkeit ausgewählt aus der Gruppe bestehend aus Br⁻, AlCl₄⁻, Al₂Cl₇⁻, NO₃⁻, BF₄⁻, PF₆⁻, CH₃COO⁻, CF₃COO⁻, CF₃CO₃⁻, CF₃SO₃⁻, (CF₃SO₂)₂N⁻, (CF₃SO₂)₃C⁻, AsF₆⁻, SbF₆⁻, CF₃(CF₂)₃SO₃⁻ (CF₃CF₂SO₂)₂N⁻, CF₃CF₂CF₂COO⁻, (FSO₂)₂N⁻. Diese Anionen sind besonders gut in Polymeren löslich, die in Klebemassen verwendet werden, wie (Meth)Acrylaten, und können schnell genug durch die Matrix diffundieren, um ein vergleichsweise schnelles Trennverfahren zu ermöglichen. Gleichzeitig verbleiben keine Rückstände.

Besonders bevorzugt ist das Anion ausgewählt aus der Gruppe bestehend aus (CF₃SO₂)₂N⁻und (FSO₂)₂N⁻.

Diese Anionen sind besonders gut geeignet, da hiermit die beste elektrische Ablösbarkeit erzielt wird. Insbesondere gelingt das (Wieder-)Ablösen mit diesen Anionen besonders schnell und es verbleiben keine Rückstände.

Bevorzugt ist das Kation der ionischen Flüssigkeit ausgewählt aus der Gruppe bestehend aus Kationen auf Imidazolium-Basis, Kationen auf Pyridinium-Basis, Kationen auf Pyrrolidin-Basis und Kationen auf Ammonium-Basis.

Diese Kationen sind besonders gut in Polymeren löslich, die in Klebemassen verwendet werden, wie (Meth)Acrylaten, und können schnell genug durch die Matrix diffundieren, um ein vergleichsweise schnelles Trennverfahren zu ermöglichen. Gleichzeitig verbleiben keine Rückstände.

Besonders bevorzugt ist das Kation ausgewählt aus der Gruppe bestehend aus Kationen auf Imidazolium-Basis.

Diese Kationen sind besonders gut geeignet, da hiermit die beste elektrische Ablösbarkeit erzielt wird. Insbesondere gelingt das (Wieder-)Ablösen mit diesen Kationen besonders schnell und es verbleiben keine Rückstände.

Ganz besonders bevorzugt ist das Kation ausgewählt aus der Gruppe bestehend aus 1-Ethyl-3-methylimidazolium und 1-Butyl-3-methylimidazolium. Wiederum bevorzugt ist das Kation 1-Ethyl-3-methylimidazolium.

Besonders bevorzugt ist der Elektrolyt der Klebemasseschicht D ausgewählt aus der Gruppe bestehend aus den ionischen Flüssigkeiten 1-Ethyl-3-methylimidazolium-bis(trifluormethylsulfonyl)imid (EMIM-TFSI) und 1-Ethyl-3-methylimidazolium bis(fluorsulfonyl)imid (EMIM-FSI). Diese ionischen Flüssigkeiten sind besonders gut in Polymeren löslich, die in Klebemassen verwendet werden, wie (Meth)Acrylaten, und können schnell genug durch die Matrix diffundieren, um ein vergleichsweise schnelles Trennverfahren zu ermöglichen. Gleichzeitig verbleiben keine Rückstände.

Die Masse der Klebemasseschicht D enthält bevorzugt wenigstens ein Polymer.

Besonders bevorzugt ist es, dass die Klebemasseschicht D poly(meth)acrylat-basiert ist.

Unter dem Ausdruck "(meth)acrylat-basiert" ist im Rahmen der vorliegenden Erfindung zu verstehen, dass Poly(meth)acrylate die Hauptpolymere der Klebemasse darstellen und dementsprechend zu 90 bis 100 Gew.-% in der Klebemasseschicht D enthalten sind, dabei bezogen auf 100 Gew.-%, also bezogen auf die Gesamtmenge an in der Klebemasseschicht D enthaltenen Polymeren. Etwaige in der Klebemasseschicht D enthaltenen Klebharze werden nicht zu den 100 Gew.-% an enthaltenen Polymeren gezählt.

Sofern die Klebemasseschicht weniger als 100 Gew.-% (bezogen auf die Gesamtmenge an enthaltenen Polymeren) an Poly(meth)acrylaten enthält, enthält sie wenigstens einen Typen an weiteren Polymeren.

Besonders bevorzugt sind die in der Klebemasseschicht D enthaltenen Polymere zu 100 Gew.-% Poly(meth)acrylate.

Bei den Poly(meth)acrylaten sämtlicher Ausführungsformen kann es sich prinzipiell um jegliche Poly(meth)acrylate handeln, die für die Verwendung in Klebemassen geeignet sind.

Unter einem "Poly(meth)acrylat" wird ein Polymer verstanden, welches insbesondere durch radikalische oder anionische Polymerisation von Acryl- und/oder Methacrylmonomeren sowie gegebenenfalls weiteren, copolymerisierbaren Monomeren erhältlich ist. Insbesondere wird unter einem "Poly(meth)acrylat" ein Polymer verstanden, dessen Monomerbasis zu mindestens 50 Gew.-% aus Acrylsäure, Methacrylsäure, Acrylsäureestern und/oder Methacrylsäureestern besteht, wobei Acrylsäureester und/oder Methacrylsäureester zumindest anteilig, bevorzugt zu mindestens 30 Gew.-%, bezogen auf die gesamte Monomerbasis des betreffenden Polymers, enthalten sind.

Bevorzugt enthält das Poly(meth)acrylat zumindest anteilig einpolymerisierte funktionelle Monomere, besonders bevorzugt Monomere wenigstens einer Sorte mit wenigstens einer funktionellen Gruppe, die ausgewählt ist aus der Gruppe bestehend aus Carbonsäuregruppen, Sulfonsäuregruppen, Phosphonsäuregruppen, Hydroxygruppen, Säureanhydridgruppen, Epoxidgruppen und Aminogruppen.

Die genannten Gruppen mit Ausnahme von Epoxidgruppen weisen eine Reaktivität mit Epoxidgruppen auf, wodurch das Poly(meth)acrylat vorteilhaft einer thermischen Vernetzung mit eingebrachten Epoxiden zugänglich wird.

Ganz besonders bevorzugt enthält das Poly(meth)acrylat zumindest anteilig einpolymerisierte funktionelle Monomere, besonders bevorzugt Monomere wenigstens einer Sorte mit wenigstens einer funktionellen Gruppe, die ausgewählt ist aus der Gruppe bestehend aus Carbonsäuregruppen, und Epoxidgruppen; insbesondere enthält es mindestens eine Carbonsäuregruppe.

Gemäß besonders vorteilhafter Ausführungsformen enthält das Poly(meth)acrylat anteilig einpolymerisierte Acrylsäure und/oder Methacrylsäure. Hierdurch weist das Poly(meth)acrylat aufgrund der Carbonsäuregruppen eine Reaktivität mit Epoxidgruppen auf, wodurch das Poly(meth)acrylat vorteilhaft einer thermischen Vernetzung mit eingebrachten Epoxiden zugänglich wird.

Das Poly(meth)acrylat kann bevorzugt auf die folgende Monomerzusammensetzung zurückgeführt werden:
a) mindestens ein Acrylsäureester und/oder Methacrylsäureester der folgenden Formel (1)

   (1) CH₂=C(R^{I})(COOR^{II}),

   worin R^{I} = H oder CH₃ und R" ein Alkylrest mit 4 bis 18 C-Atomen ist;
b) mindestens ein olefinisch ungesättigtes Monomer mit mindestens einer funktionellen Gruppe ausgewählt aus der Gruppe bestehend aus Carbonsäuregruppen, Sulfonsäuregruppen, Phosphonsäuregruppen, Hydroxygruppen, Säureanhydridgruppen, Epoxidgruppen und Aminogruppen;
c) optional weitere Acrylsäureester und/oder Methacrylsäureester und/oder olefinisch ungesättigte Monomere, die mit der Komponente (a) copolymerisierbar sind.

Gemäß einer besonders vorteilhaften Ausführungsform basiert das Poly(meth)acrylat auf einer Monomerzusammensetzung, die Monomere der Gruppe a) mit einem Anteil von 93 bis 99 Gew.-% und Monomere der Gruppe b) mit einem Anteil von 1 bis 7 Gew.-% enthält.

Mit einem derartigen Poly(meth)acrylat in der Klebemasseschicht D des erfindungsgemäßen Klebebandes wird ein besonders gutes Eigenschaftsprofil umfassend die Klebrigkeit, die Schockbeständigkeit sowie die rückstandsfreie Ablösbarkeit erzielt.

Die Monomere der Komponente a) sind allgemein weichmachende, eher unpolare Monomere. Besonders bevorzugt ist R" in den Monomeren a) ein Alkylrest mit 4 bis 10 C-Atomen. Die Monomere der Formel (1) sind insbesondere ausgewählt aus der Gruppe bestehend aus n-Butylacrylat, n-Butylmethacrylat, n-Pentylacrylat, n-Pentylmethacrylat, n-Amylacrylat, n-Hexylacrylat, n-Hexylmethacrylat, n-Heptylacrylat, n-Octylacrylat, n-Octylmethacrylat, n-Nonylacrylat, Isobutylacrylat, Isooctylacrylat, Isooctylmethacrylat, 2-Ethylhexylacrylat, 2-Ethylhexylmethacrylat, 2-Propylheptylacrylat und 2-Propylheptylmethacrylat.

Besonders bevorzugt sind die Monomere der Formel (1) bzw. der Gruppe a) ausgewählt aus der Gruppe bestehend aus n-Butylacrylat, n-Hexylacrylat, n-Octylacrylat, Isooctylacrylat, 2-Ethylhexylacrylat und 2-Propylheptylacrylat.

Die genannten Monomere lassen sich besonders gut polymerisieren und die Glasübergangstemperatur des hergestellten Poly(meth)acrylates besonders gut einstellen. Hierdurch können wiederum optimierte Eigenschaften im Hinblick auf die Fließfähigkeit und Klebrigkeit erzielt werden, welche auch an das jeweilige zu verklebende Substrat bzw. Bauteil angepasst sind.

Dabei sind die Monomere der Formel (1) bzw. der Gruppe a) wiederum bevorzugt ausgewählt aus der Gruppe bestehend aus n-Butylacrylat, Isooctylacrylat und 2-Ethylhexylacrylat.

Ganz besonders bevorzugt werden als Monomere der Formel (1) bzw. der Gruppe a) n-Butylacrylat und 2-Ethylhexylacrylat verwendet.

Die Monomere der Gruppe b) sind besonders bevorzugt ausgewählt aus der Gruppe bestehend aus Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Maleinsäureanhydrid, Hydroxyethylacrylat,
2-Hydroxyethylacrylat, Hydroxypropylacrylat, 3-Hydroxypropylacrylat, Hydroxybutylacrylat, 4-Hydroxybutylacrylat, Hydroxyhexylacrylat, 6-Hydroxyhexylacrylat, Hydroxyethylmethacrylat, 2-Hydroxyethylmethacrylat, Hydroxypropylmethacrylat, 3-Hydroxypropylmethacrylat, Hydroxybutylmethacrylat, 4-Hydroxybutylmethacrylat, Hydroxyhexylmethacrylat, 6-Hydroxyhexylmethacrylat, Allylalkohol, Glycidylacrylat, Glycidylmethacrylat.

Bevorzugt sind die Monomere der Gruppe b) ausgewählt aus Acrylsäure, Methacrylsäure und Hydroxyethylacrylat.

Ganz besonders bevorzugt wird als Monomere der Gruppe b) Acrylsäure verwendet.

Beispielhafte Monomere der Komponente c) sind:
Methylacrylat, Ethylacrylat, Propylacrylat, Methylmethacrylat, Ethylmethacrylat, Benzylacrylat, Benzylmethacrylat, sec-Butylacrylat, tert-Butylacrylat, Phenylacrylat, Phenylmethacrylat, Isobornylacrylat, Isobornylmethacrylat, tert-Butylphenylacrylat, tert-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethylacrylat, Dimethylaminoethylmethacrylat, 3-Methoxyacrylsäuremethylester, 3-Methoxybutylacrylat, 2-Phenoxyethylmethacrylat, Butyldiglykolmethacrylat, Ethylenglycolacrylat, Ethylenglycolmonomethylacrylat, Methoxypolyethylenglykolmethacrylat 350, Methoxypolyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluorethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, N-(1-Methylundecyl)acrylamid, N-(n-Butoxymethyl)acrylamid, N-(Butoxymethyl)methacrylamid, N-(Ethoxymethyl)acrylamid, N-(n-Octadecyl)acrylamid; N,N-Dialkyl-substituierte Amide wie beispielsweise N,N-Dimethylacrylamid und N,N-Dimethylmethacrylamid; N-Benzylacrylamid, N-Isopropylacrylamid, N-tert-Butylacrylamid, N-tert-Octylacrylamid, N-Methylolacrylamid, N-Methylolmethacrylamid, Acrylnitril, Methacrylnitril; Vinylether wie Vinylmethylether, Ethylvinylether, Vinylisobutylether; Vinylester wie Vinylacetat; Vinylhalogenide, Vinylidenhalogenide, Vinylpyridin, 4-Vinylpyridin, N-Vinylphthalimid, N-Vinyllactam, N-Vinylpyrrolidon, Styrol, α- und p-Methylstyrol, α-Butylstyrol, 4-n-Butylstyrol, 4-n-Decylstyrol, 3,4-Dimethoxystyrol; Makromonomere wie 2-Polystyrolethylmethacrylat (gewichtsmittleres Molekulargewicht Mw, bestimmt mittels GPC, von 4000 bis 13000 g/mol), Poly(methylmethacrylat)ethylmethacrylat (Mw von 2000 bis 8000 g/mol).

Monomere der Komponente c) können vorteilhaft auch derart gewählt werden, dass sie funktionelle Gruppen enthalten, die eine nachfolgende strahlenchemische Vernetzung (beispielsweise durch Elektronenstrahlen oder UV-Strahlung) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofurfurylacrylat, N-tert-Butylacrylamid und Allylacrylat.

Bevorzugt handelt es sich bei dem Poly(meth)acrylat um ein Polyacrylat, welches durch Polymerisation von n-Butylacrylat und/oder n-Hexylacrylat und/oder n-Octylacrylat und/oder Isooctylacrylat und/oder 2-Ethylhexylacrylat und/oder 2-Propylheptylacrylat und Acrylsäure hergestellt ist.

Besonders bevorzugt handelt es sich bei dem Poly(meth)acrylat um ein Polyacrylat, welches durch Polymerisation von n-Butylacrylat, 2-Ethylhexylacrylat und Acrylsäure hergestellt ist.

Hierdurch ergibt sich eine besonders hohe Klebkraft der Klebemasseschicht D. Somit weist auch das erfindungsgemäße Klebeband eine besonders hohe Klebkraft auf, insbesondere wenn das Klebeband über wenigstens eine Fläche der Klebemasseschicht D verklebt wird.

Die Herstellung der Poly(meth)acrylate geschieht bevorzugt durch konventionelle radikalische Polymerisationen oder kontrollierte radikalische Polymerisationen. Die Poly(meth)acrylate können durch Copolymerisation der Monomere unter Verwendung üblicher Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Bevorzugt werden die Poly(meth)acrylate durch Copolymerisation der Monomere in Lösungsmitteln, besonders bevorzugt in Lösungsmitteln mit einem Siedebereich von 50 bis 150 °C, insbesondere von 60 bis 120 °C, unter Verwendung von 0,01 bis 5 Gew.-%, insbesondere von 0,1 bis 2 Gew.-%, jeweils bezogen auf das Gesamtgewicht der Monomeren, an Polymerisationsinitiatoren hergestellt.

Prinzipiell eignen sich alle üblichen Initiatoren. Beispiele für Radikalquellen sind Peroxide, Hydroperoxide und Azoverbindungen, zum Beispiel Bis-(4-tert-butylcyclohexyl)peroxydicarbonat, Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat und Benzpinacol. Bevorzugte radikalische Initiatoren sind 2,2'-Azobis(2-methylbutyronitril) (Vazo^{®} 67^{™} der Firma DuPont) oder 2,2'-Azobis(2-methylpropionitril) (2,2'-Azobisisobutyronitril; AIBN; Vazo^{®} 64^{™} der Firma DuPont).

Gemäß bevorzugter Ausführungsformen wird Bis-(4-tert-butylcyclohexyl)peroxydicarbonat verwendet.

Bevorzugte Lösungsmittel für die Herstellung der Poly(meth)acrylate sind Alkohole wie Methanol, Ethanol, n- und iso-Propanol, n- und iso-Butanol, insbesondere Isopropanol und/oder Isobutanol; Kohlenwasserstoffe wie Toluol und insbesondere Benzine eines Siedebereichs von 60 bis 120 °C; Ketone, insbesondere Aceton, Methylethylketon, Methylisobutylketon; Ester wie Essigsäureethylester sowie Gemische der vorstehend genannten Lösungsmittel. Besonders bevorzugte Lösungsmittel sind Gemische, die Isopropanol in Mengen von 2 bis 15 Gew.-%, insbesondere von 3 bis 10 Gew.-%, jeweils bezogen auf das eingesetzte Lösungsmittelgemisch, enthalten.

Nach der Herstellung der Poly(meth)acrylate können diese sowohl aus Lösung weiterverarbeitet werden, oder es erfolgt eine Aufkonzentration, und die weitere Verarbeitung der Poly(meth)acrylate erfolgt im Wesentlichen lösemittelfrei. Die Aufkonzentration des Polymerisats kann in Abwesenheit von Vernetzer- und Beschleunigersubstanzen geschehen. Es ist aber auch möglich, eine dieser Verbindungsklassen dem Polymerisat bereits vor der Aufkonzentration zuzusetzen, so dass die Aufkonzentration dann in Gegenwart dieser Substanz(en) erfolgt.

Die Polymerisate können nach dem Aufkonzentrationsschritt in einen Compounder überführt werden. Gegebenenfalls können die Aufkonzentration und die Compoundierung auch im selben Reaktor stattfinden.

Die gewichtsmittleren Molekulargewichte (Gewichtsmittel der Molekulargewichtsverteilung) Mw des oder der Poly(meth)acrylate liegen bevorzugt in einem Bereich von 20.000 bis 2.000.000 g/mol, besonders bevorzugt in einem Bereich von 100.000 bis 1.500.000 g/mol, ganz besonders bevorzugt in einem Bereich von 150.000 bis 1.000.000 g/mol. Dazu kann es vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.

Mit einem derartigen Mw inklusive sämtlicher Bevorzugungsstufen des oder der Poly(meth)acrylate wird eine ausreichende Kohäsion bei gleichzeitig guter Fließfähigkeit und guter Adhäsion der Klebemasse erzielt, wobei es sich versteht, dass die Klebemasse hinsichtlich des Eigenschaftsprofils der genannten Eigenschaften bei höherer Bevorzugungsstufe in einem höheren Maß optimiert ist.

Die Bestimmung des Mw erfolgt gemäß GPC wie unter den Prüfmethoden beschrieben.

Die Poly(meth)acrylate haben vorzugsweise einen K-Wert von 30 bis 90, besonders bevorzugt von 40 bis 70, gemessen in Toluol (1%ige Lösung, 21 °C). Der K-Wert nach Fikentscher ist ein Maß für das Molekulargewicht und die Viskosität von Polymeren.

Das Prinzip der Methode beruht auf der kapillarviskosimetrischen Bestimmung der relativen Lösungsviskosität. Hierzu wird die Testsubstanz in Toluol durch dreißigminütiges Schütteln aufgelöst, so dass man eine 1 %-ige Lösung erhält. In einem Vogel-Ossag-Viskosimeter wird bei 25 °C die Auslaufzeit gemessen und daraus in Bezug auf die Viskosität des reinen Lösungsmittels die relative Viskosität der Probenlösung bestimmt. Aus Tabellen kann nach Fikentscher [P. E. Hinkamp, Polymer, 1967, 8, 381] der K-Wert abgelesen werden (K = 1000 k).

Bevorzugt weist das Poly(meth)acrylat eine Polydispersität PD < 4 und somit eine relativ enge Molekulargewichtsverteilung auf. Darauf basierende Massen haben trotz eines relativ niedrigen Molekulargewichts nach dem Vernetzen eine besonders gute Scherfestigkeit.

Zudem ermöglicht die niedrigere Polydispersität eine leichtere Verarbeitung aus der Schmelze, da die Fließviskosität gegenüber einem breiter verteilten Poly(meth)acrylat bei weitgehend gleichen Anwendungseigenschaften geringer ist. Eng verteilte Poly(meth)acrylate können vorteilhaft durch anionische Polymerisation oder durch kontrollierte radikalische Polymerisationsmethoden hergestellt werden, wobei letztere besonders gut geeignet sind. Auch über N-Oxyle lassen sich entsprechende Poly(meth)acrylate herstellen. Ferner lässt sich in vorteilhafter Weise die Atom Transfer Radical Polymerization (ATRP) zur Synthese eng verteilter Poly(meth)acrylate einsetzen, wobei als Initiator bevorzugt monofunktionelle oder difunktionelle sekundäre oder tertiäre Halogenide und zur Abstraktion der Halogenide Cu-, Ni-, Fe-, Pd-, Pt-, Ru-, Os-, Rh-, Co-, Ir-, Ag- oder Au-Komplexe eingesetzt werden. Auch RAFT-Polymerisation ist geeignet.

Die Poly(meth)acrylate sind bevorzugt durch Verknüpfungsreaktionen - insbesondere im Sinne von Additions- oder Substitutionsreaktionen - von in ihnen enthaltenen funktionellen Gruppen, wie insbesondere Carbonsäuregruppen, mit thermischen Vernetzern vernetzt. Hierdurch ergibt sich der Vorteil, dass die Klebemasse nicht zu weich ist und einen nicht zu hohen Kaltfluss aufweist. Dies wirkt sich vorteilhaft auf die Kohäsion der Klebemasse sowie die Lagerung und Verarbeitbarkeit der Klebemasse aus.

Es können alle thermischen Vernetzer verwendet werden, die
- sowohl eine ausreichend lange Verarbeitungszeit gewährleisten, sodass es nicht zu einer Vergelung während des Verarbeitungsprozesses, insbesondere des Extrusionsprozesses, kommt,
- als auch zu einer schnellen Nachvernetzung des Polymers auf den gewünschten Vernetzungsgrad bei niedrigeren Temperaturen als der Verarbeitungstemperatur, insbesondere bei Raumtemperatur, führen.

Möglich ist beispielsweise eine Kombination aus Carboxy- (Carbonsäure-), Amino- und/oder Hydroxygruppen enthaltenden Polymeren und Isocyanaten, insbesondere aliphatischen oder blockierten Isocyanaten, beispielsweise mit Aminen deaktivierten trimerisierten Isocyanaten, als Vernetzer. Geeignete Isocyanate sind insbesondere trimerisierte Derivate von MDI [4,4-Methylendi(phenylisocyanat)], HDI [Hexamethylendiisocyanat, 1,6-Hexylendiisocyanat] und IPDI [Isophorondiisocyanat, 5-Isocyanato-1-isocyanatomethyl-1,3,3-trimethylcyclohexan].

Bevorzugt werden thermische Vernetzer zu 0,1 bis 5 Gew.-%, insbesondere zu 0,2 bis 1 Gew.-%, bezogen auf die Gesamtmenge des zu vernetzenden Polymers, eingesetzt.

Auch eine Vernetzung über Komplexbildner, auch als Chelate bezeichnet, ist möglich. Ein bevorzugter Komplexbildner ist beispielsweise Aluminiumacetylacetonat.

Bevorzugt sind die Poly(meth)acrylate mittels Epoxid(en) bzw. mittels einer oder mehrerer epoxidgruppenhaltiger Substanz(en) vernetzt. Hierdurch wird eine dauerhafte, nichtreversible, Vernetzung sichergestellt.

Bei den epoxidgruppenhaltigen Substanzen handelt es sich insbesondere um multifunktionelle Epoxide, also solche mit zumindest zwei Epoxidgruppen; entsprechend kommt es insgesamt zu einer mittelbaren Verknüpfung der die funktionellen Gruppen tragenden Bausteine der Poly(meth)acrylate. Die epoxidgruppenhaltigen Substanzen können sowohl aromatische als auch aliphatische Verbindungen sein.

Hervorragend geeignete multifunktionelle Epoxide sind Oligomere des Epichlorhydrins, Epoxyether mehrwertiger Alkohole, insbesondere Ethylen-, Propylen-, und Butylenglycole, Polyglycole, Thiodiglycole, Glycerin, Pentaerythrit, Sorbit, Polyvinylalkohol, Polyallylalkohol und ähnliche; Epoxyether mehrwertiger Phenole, insbesondere Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)ethan, 2,2-Bis-(4-hydroxyphenyl)propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 2,2-Bis-(4-hydroxy-3,5-dichlorphenyl)-propan, Bis-(4-hydroxyphenyl)-phenylmethan, Bis-(4-hydroxyphenyl)-phenylmethan, Bis-(4-hydroxyphenyl)diphenylmethan, Bis (4-hydroxyphenyl)-4'-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon sowie deren Hydroxyethylether; Phenol-Formaldehyd-Kondensationsprodukte wie Phenolalkohole und Phenolaldehydharze; S- und N-haltige Epoxide, zum Beispiel N,N-Diglycidylanilin, N,N'-Dimethyldiglycidyl-4,4-Diaminodiphenylmethan, Tetraglycidyl-meta-Xylenediamine; sowie Epoxide, welche nach üblichen Verfahren aus mehrfach ungesättigten Carbonsäuren oder einfach ungesättigten Carbonsäureestern ungesättigter Alkohole hergestellt worden sind; Glycidylester; Polyglycidylester, die durch Polymerisation oder Mischpolymerisation von Glycidylestern ungesättigter Säuren gewonnen werden können oder aus anderen sauren Verbindungen, zum Beispiel aus Cyanursäure, Diglycidylsulfid oder cyclischem Trimethylentrisulfon bzw. dessen Derivaten erhältlich sind.

Sehr geeignete Ether sind beispielsweise 1,4-Butandioldiglycidether, Polyglycerol-3-glycidether, Cyclohexandimethanoldiglycidether, Glycerintriglycidether, Neopentylglykoldiglycidether, Pentaerythrittetraglycidether, 1,6-Hexandioldiglycidether, Polypropylenglykoldiglycidether, Trimethylolpropantriglycidether, Pentaerythrittetraglycidether, Bisphenol-A-diglycidether und Bisphenol-F-diglycidether.

Weitere bevorzugte Epoxide sind cycloaliphatische Epoxide wie 3,4-Epoxycyclohexylmethyl-3,4-epoxycyclohexancarboxylat (UVACure1500).

Gemäß bevorzugter Ausführungsformen wird als Vernetzer Tetraglycidyl-meta-Xylenediamin verwendet.

Gemäß bevorzugter Ausführungsformen sind die Poly(meth)acrylate mittels eines Vernetzer-Beschleuniger-Systems ("Vernetzungssystem") vernetzt, um eine bessere Kontrolle sowohl über die Verarbeitungszeit, die Vernetzungskinetik sowie den Vernetzungsgrad zu erhalten. Das Vernetzer-Beschleuniger-System umfasst bevorzugt zumindest eine epoxidgruppenhaltige Substanz als Vernetzer und zumindest eine bei einer Temperatur unterhalb der Schmelztemperatur des zu vernetzenden Polymers für Vernetzungsreaktionen mittels epoxidgruppenhaltiger Verbindungen beschleunigend wirkende Substanz als Beschleuniger.

Als Beschleuniger werden erfindungsgemäß besonders bevorzugt Amine eingesetzt. Diese sind formell als Substitutionsprodukte des Ammoniaks aufzufassen; die Substituenten umfassen insbesondere Alkyl- und/oder Arylreste. Besonders bevorzugt werden solche Amine eingesetzt, die mit den zu vernetzenden Polymeren keine oder nur geringfügige Reaktionen eingehen.

Prinzipiell können als Beschleuniger sowohl primäre (NRH₂), sekundäre (NR₂H) als auch tertiäre Amine (NR₃) gewählt werden, selbstverständlich auch solche, die mehrere primäre und/oder sekundäre und/oder tertiäre Aminogruppen aufweisen. Besonders bevorzugte Beschleuniger sind tertiäre Amine wie beispielweise Triethylamin, Triethylendiamin, Benzyldimethylamin, Dimethylaminomethylphenol, 2,4,6-Tris-(N,N-dimethylaminomethyl)-phenol, N,N'-Bis(3-(dimethylamino)propyl)harnstoff. Weitere bevorzugte Beschleuniger sind multifunktionelle Amine wie Diamine, Triamine und/oder Tetramine, zum Beispiel Diethylentriamin, Triethylentetramin, Trimethylhexamethylendiamin.

Weitere bevorzugte Beschleuniger sind Aminoalkohole, insbesondere sekundäre und/oder tertiäre Aminoalkohole, wobei im Falle mehrerer Aminofunktionalitäten pro Molekül bevorzugt mindestens eine, besonders bevorzugt alle Aminofunktionalitäten sekundär und/oder tertiär sind. Besonders bevorzugte, derartige Beschleuniger sind Triethanolamin, N,N-Bis(2-hydroxypropyl)ethanolamin, N-Methyldiethanolamin, N-Ethyldiethanolamin, 2-Aminocyclohexanol, Bis(2-hydroxycyclohexyl)methylamin, 2-(Diisopropylamino)ethanol, 2-(Dibutylamino)ethanol, N-Butyldiethanolamin, N-Butylethanolamin, 2-[Bis(2-hydroxyethyl)amino]-2-(hydroxymethyl)-1,3-propandiol, 1-[Bis(2-hydroxyethyl)amino]-2-propanol, Triisopropanolamin, 2-(Dimethylamino)ethanol, 2-(Diethylamino)ethanol,
2-(2-Dimethylaminoethoxy)ethanol, N,N,N'-Trimethyl-N'-hydroxyethylbisaminoethylether, N,N,N'-Trimethylaminoethylethanolamin und N,N,N'-Trimethylaminopropylethanolamin.

Weitere geeignete Beschleuniger sind Pyridin, Imidazole wie beispielsweise 2-Methylimidazol und 1,8-Diazabicyclo[5.4.0]undec-7-en. Auch cycloaliphatische Polyamine können als Beschleuniger eingesetzt werden. Geeignet sind auch Beschleuniger auf Phosphorbasis wie Phosphine und/oder Phosphoniumverbindungen, beispielsweise Triphenylphosphin oder Tetraphenylphosphoniumtetraphenylborat.

Auch quartäre Ammoniumverbindungen können als Beschleuniger verwendet werden; Beispiele sind Tetrabutylammoniumhydroxid, Cetyltrimethylammoniumbromid und Benzalkoniumchlorid.

Bevorzugt ist es, dass die erste Klebemasseschicht D 2 bis 10 Gew.-%, besonders bevorzugt 4 bis 6 Gew.-%, an Elektrolyten, bevorzugt ionischen Flüssigkeiten, bezogen auf 100 Gew.-% an enthaltenen Polymeren enthält, wobei die Polymere bevorzugt zu 100 Gew.-% Poly(meth)acrylate sind.

Mit einer derartigen bevorzugten bzw. besonders bevorzugten Menge an Elektrolyten, insbesondere ionischen Flüssigkeiten, wird ein vergleichsweise schnelles elektrisches Ablösen ermöglicht, wobei gleichzeitig die Adhäsion der Klebemasseschicht an die benachbarten Schichten, insbesondere wenigstens ein Substrat, vor dem Ablösen nicht negativ beeinträchtigt ist.

Die Klebemasseschicht D ist erfindungsgemäß geschäumt, wobei die Schäumung mittels Mikroballons hergestellt ist, wobei die Mikroballons an ihrer Oberfläche eine Schicht aus Silikat oder Alumosilikat aufweisen.

Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit bzw. als Gas sind insbesondere Kohlenwasserstoffe der niederen Alkane, beispielsweise Isobutan oder Isopentan geeignet, die als verflüssigtes Gas unter Druck in der Polymerhülle eingeschlossen sind, wobei Isopentan besonders bevorzugt ist.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 µm Durchmesser im unexpandierten Zustand) und ihre zur Expansion benötigten Starttemperaturen (75 bis 220 °C) differenzieren. Ein Beispiel für kommerziell erhältliche Mikroballons sind die Expancel^{®} DU-Typen (DU = dry unexpanded) von der Firma Nuryon bzw. die Microsphere^{®} FN-Typen von der Firma Matsumoto.

Die Mikroballons besitzen zur Stabilisierung auf ihrer Oberfläche häufig eine anorganische Schicht. Dieses kann z.B. ein Silikat oder ein Alumosilikat sein. Es können aber auch Carbonate wie Calciumcarbonat eingesetzt werden, oder unterschiedliche Oxide.

Überraschenderweise hat sich im Rahmen der vorliegenden Erfindung herausgestellt, dass lediglich mit Mikroballons, welche an ihrer Oberfläche eine Schicht aus Silikat oder Alumosilikat aufweisen, eine elektrisch ablösbare und hierzu Elektrolyten enthaltende und gleichzeitig geschäumte Klebemasseschicht D herstellbar ist.

Silikate sind die Salze der Ortho-Kieselsäure (Si(OH)₄) und deren Kondensate. Alle Salze sind durch SiO₄-Tetraeder aufgebaute Verbindungen, deren Tetraeder jedoch auf verschiedene Weise miteinander verknüpft sein können. Unverknüpfte Stellen der Tetraeder tragen zum Ladungsausgleich Metallkationen bei oder liegen eventuell als Hydroxidionen (OH-) vor. Alumosilikate sind die Sammelbezeichnungen für chemische Verbindungen aus der Gruppe der Silikate, die sich aus den Grundbausteinen SiO₄-Tetraeder und AlO₄-Tetraeder aufbauen.

Ferner kann zwischen unexpandierten und vorexpandierten Mikroballons unterschieden werden.

Im Rahmen der vorliegenden Erfindung ist prinzipiell die Verwendung von unexpandierten und/oder vorexpandierten Mikroballons denkbar.

Unexpandierte Mikroballons werden dabei üblicherweise im unexpandierten Zustand einer Masse zugegeben und erst im Anschluss erfolgt eine Expansion, insbesondere durch Erwärmen.

Unexpandierte Mikroballontypen sind auch als wässrige Dispersion mit einem Feststoff beziehungsweise Mikroballonanteil von ca. 40 bis 45 Gew.-% erhältlich, weiterhin auch als polymergebundene Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Herstellung einer geschäumten Klebemasse geeignet.

Geschäumte Klebemasseschichten können auch mit sogenannten vorexpandierten Mikroballons erzeugt werden. Bei vorexpandierten Mikroballons findet eine Expansion schon vor der Einmischung in die Polymermatrix statt. Vorexpandierte Mikroballons sind beispielsweise unter der Bezeichnung Dualite^{®} kommerziell erhältlich. Bei der Verarbeitung von bereits expandierten Mikroballontypen kann es passieren, dass die Mikroballons aufgrund ihrer geringen Dichte in der Polymermatrix, in die diese eingearbeitet werden sollen, zur Flotation neigen, also in der Polymermatrix während des Verarbeitungsprozesses "nach oben" aufschwimmen. Dies führt zu einer ungleichmäßigen Verteilung der Mikroballons in der Schicht. Im oberen Bereich der Schicht (z-Richtung) sind mehr Mikroballons anzutreffen als im unteren Bereich der Schicht, so dass sich ein Dichtegradient über die Schichtdicke einstellt.

Um einen solchen Dichtegradienten weitgehend oder nahezu vollständig zu verhindern, werden erfindungsgemäß bevorzugt nicht oder nur wenig vorexpandierte und damit expandierbare Mikroballons in die Polymermatrix der Klebemasseschichten eingearbeitet. Erst nach dem Einarbeiten in die Schicht werden die Mikroballons expandiert. Auf diese Weise ergibt sich eine gleichmäßigere Verteilung der Mikroballons in der Polymermatrix.

Erst nach oder unmittelbar bei der Einarbeitung erfolgt dann die Expansion der expandierbaren Mikroballons, wodurch die Schäumung hergestellt wird. Bei lösungsmittelhaltigen Massen werden die Mikroballons bevorzugt erst nach dem Einarbeiten, Beschichten, Trocknen (Lösungsmittelabdampfen) expandiert.

Gemäß bevorzugter Ausführungsformen der Erfindung ist die Klebemasseschicht D somit geschäumt, wobei die Schäumung mittels Expandierens von expandierbaren Mikroballons hergestellt ist, wobei die expandierbaren Mikroballons an ihrer Oberfläche eine Schicht aus Silikat oder Alumosilikat aufweisen.

Bevorzugt beträgt der mittlere Durchmesser der von den Mikroballons gebildeten Hohlräume in der oder den geschäumten Klebemasseschicht(en) 10 bis 200 µm, besonders bevorzugt von 15 bis 200 µm, ganz besonders bevorzugt 15 bis 150 µm, wiederum bevorzugt von 20 bis 100 µm, wiederum besonders bevorzugt von 25 bis 70 µm. Mit den genannten bevorzugten und besonders bevorzugten Größenbereichen wird eine besonders gute Schockresistenz erzielt. Gleichzeitig sind die Größen im Hinblick auf die Schichtdicken der Klebemasseschicht(en) angepasst.

Da hierbei die Durchmesser der von den Mikroballons gebildeten Hohlräume in der geschäumten Klebemasseschicht vermessen werden, handelt es sich bei den Durchmessern um jene Durchmesser der von den expandierten Mikroballons gebildeten Hohlräume. Mit dem mittleren Durchmesser ist dabei das arithmetische Mittel der Durchmesser der von den Mikroballons gebildeten Hohlräume in der Klebemasseschicht gemeint. Die Bestimmung des mittleren Durchmessers der von den Mikroballons gebildeten Hohlräume in einer Klebemasseschicht erfolgt anhand von 5 verschiedenen Kryobruchkanten des Klebebands im Rasterelektronenmikroskop (REM) bei 500-facher Vergrößerung. Die Durchmesser der auf den Aufnahmen zu sehenden Mikroballons werden graphisch derart ermittelt, dass aus den REM Aufnahmen für jeden einzelnen Mikroballon der zu untersuchenden Klebemasseschicht dessen maximale Ausdehnung in beliebiger (zweidimensionaler) Richtung entnommen wird und als dessen Durchmesser angesehen wird.

Die Mikroballons können als Batch, Paste oder als unverschnittenes oder verschnittenes Pulver der Formulierung zugeführt werden. Des Weiteren können sie in Lösungsmittel suspendiert vorliegen.

Der Anteil der Mikroballons in der Klebemasseschicht liegt gemäß bevorzugter Ausführungsformen der Erfindung zwischen größer 0 Gew.-% und 12 Gew.-%, besonders bevorzugt zwischen 0,25 Gew.-% und 5 Gew.-%, ganz besonders bevorzugt zwischen 0,5 und 3 Gew.-%, jeweils bezogen auf die Gesamtzusammensetzung (einschließlich eingemischter Mikroballons) der entsprechenden Schicht.

Durch die genannten Mengen wird der Zielkonflikt aus den Eigenschaften umfassend Klebrigkeit, Fließverhalten und Schäumung besonders gut gelöst.

Die Klebemasse der Klebemasseschicht D kann ferner weitere übliche Additive, wie Klebharze, Weichmacher, Kompatibilisatoren und Füllstoffe enthalten.

Als Kompatibilisatoren werden bevorzugt niedermolekulare Polyether, Polyamine, Polyvinylpyrrolidone oder aliphatische Polyester eingesetzt, die mit der Klebemasse homogen mischbar sind.

Einige Weichmacher können auch zugleich Kompatibilisatoren sein, wie z.B. Polyethylenglykol (PEG).

Gemäß besonders bevorzugter Ausführungsformen enthält die Klebemasse der Klebemasseschicht D wenigstens einen Polyether, bevorzugt wenigstens eine Substanz, die ausgewählt ist aus der Gruppe bestehend aus Polyethylenglykol (PEG), Polypropylenglykol (PPG), Polytetrahydrofuran, wobei PEG und PPG besonders bevorzugt sind. Hiermit wird die Ablösbarkeit besonders gut unterstützt. Ohne an eine bestimmte Theorie gebunden sein zu wollen, ist es denkbar, dass durch die genannten Substanzen, insbesondere PEG, der lonenfluss des oder der Elektrolyten durch die Masseschicht beschleunigt wird.

Das Molekulargewicht (gemäß GPC) der genannten Substanzen liegt dabei bevorzugt zwischen 100 und 5000 g/mol, besonders bevorzugt zwischen 200 und 2000 g/mol.

Dem Fachmann ist bekannt, dass PEG und PPG mit unterschiedlichen Molekulargewichten Mw erhältlich sind, wie beispielsweise PEG 400 oder PPG 600, wobei die Zahl das Mw angibt.

Ein weiterer Gegenstand der vorliegenden Erfindung ist ein verklebter Verbund umfassend wenigstens folgende Schichten:
- Ein erstes Substrat A; und
- Ein zweites Substrat B; und
- Ein erfindungsgemäßes Klebeband, welches zwischen dem Substrat A und dem Substrat B angeordnet ist und die Substrate A und B miteinander verklebt.

Ein weiterer Gegenstand der vorliegenden Erfindung ist ein Verfahren zum elektrischen Lösen des erfindungsgemäßen Verbundes, umfassend wenigstens folgende Verfahrensschritte:
i.) Anlegen einer Spannung an zwei verschiedenen Stellen des Verbundes, wobei die Spannung bevorzugt 2 bis 20 V, besonders bevorzugt 3 bis 15 V, beträgt.

Das Anlegen der Spannung erfolgt gemäß Schritt i.) des erfindungsgemäßen Verfahrens zum elektrischen Lösen des Verbundes.

Bei der Spannung handelt es sich insbesondere um eine Gleichspannung.

Die zeitliche Dauer des Anlegens der Spannung in Schritt i.) kann dabei von wenigen Sekunden, insbesondere 2 Sekunden, bis zu 300 Sekunden, bevorzugt bis zu 120 Sekunden, betragen.

Durch das erfindungsgemäße Verfahren zum elektrischen Lösen des erfindungsgemäßen Verbundes lassen sich die Substrate A und B auf schnelle und einfache Weise voneinander lösen, ohne dass ein allzu großer Kraftaufwand erforderlich ist.

Sofern sich die Schichten nach Anlegen der Spannung nicht ohne weitere Einwirkung voneinander lösen, umfasst das erfindungsgemäße Verfahren wenigstens den weiteren Verfahrensschritt:
ii.) Krafteinwirkung auf die Klebemasseschicht D und/oder das Substrat A und/oder das Substrat B, sodass der Abstand zwischen den Substraten A und B vergrößert wird.

Die Kraft, die gemäß Schritt ii.) eventuell noch erforderlich ist, ist deutlich geringer als die Klebkraft vor dem Anlegen der Spannung gemäß Schritt i.)

Das Anlegen der Spannung gemäß Schritt i.) erfolgt an zwei verschiedenen Stellen des erfindungsgemäßen verklebten Verbundes. An welche Stellen die Spannung zweckmäßig angelegt wird, hängt vom Aufbau des Klebebandes und des verklebten Verbundes und somit der Beschaffenheit der einzelnen Schichten und miteinander verklebten Substrate A und B ab.

Im Folgenden werden einige bevorzugte Ausführungsformen ausgeführt.

Gemäß bevorzugter Ausführungsformen ist das Klebeband ein Transferklebeband und besteht aus der Klebemasseschicht D.

Ein solches Klebeband kann in einem verklebten Verbund mit zwei Substraten A und B vorteilhafterweise dadurch elektrisch wieder gelöst werden, dass beide Substrate A und B elektrisch leitfähig sind. Hierzu wird dann eine Spannung an die Substrate A und B angelegt, sodass es in der Klebemasse zu einer Wanderung von Anionen zur Anode und von Kationen zur Kathode kommt. Ohne an eine bestimmte Theorie gebunden sein zu wollen, wird von den Erfindern folgender Mechanismus angenommen: Durch das Anlegen der Spannung erfolgt eine Wanderung des Elektrolyten, insbesondere eine Trennung der Anionen und Kationen einer ionischen Flüssigkeit, in der Klebemasseschicht D. Hierdurch wird die Adhäsion der Klebemasseschicht D an das Substrat A und das Substrat B stark herabgesetzt und es erfolgt ein Lösen dieser Schichten voneinander.

Gemäß bevorzugter Ausführungsformen der vorliegenden Erfindung umfasst der verklebte Verbund somit folgende Schichten:
- Ein erstes Substrat A, welches elektrisch leitfähig ist; und
- Ein zweites Substrat B, welches elektrisch leitfähig ist; und
- Ein erfindungsgemäßes Klebeband, welches aus der Klebemasseschicht D besteht und zwischen dem Substrat A und dem Substrat B angeordnet ist und die Substrate A und B miteinander verklebt.

Gemäß weiterer bevorzugter Ausführungsformen umfasst das Klebeband zusätzlich zur ersten Klebemasseschicht D wenigstens die folgenden Schichten:
- Eine zweite Klebemasseschicht C; und
- wenigstens eine elektrisch leitfähige Trägerschicht T, die zwischen den Schichten D und C angeordnet ist.

Ein derartiges Klebeband kann als doppelseitiges Klebeband über die zweite Klebemasseschicht C an eine Vielzahl unterschiedlicher Substrate angepasst werden. Hierbei kann es sich prinzipiell um die gleichen Substrate handeln wie gemäß der vorherigen Ausführungsformen, in denen das Klebeband ein Transferklebeband ist.

Ein derartiges Klebeband kann zudem aber insbesondere und vorteilhafterweise auch verwendet werden, um später Substrate A und B voneinander zu lösen, von denen nur eines elektrisch leitfähig ist, zum Beispiel das Substrat A.

Gemäß bevorzugter Ausführungsformen sind entweder xi.) nur die Trägerschicht T oder xii.) die Trägerschicht T und die zweite Klebemasseschicht C elektrisch leitfähig ausgestaltet.

Hierdurch kann eine Spannung an xi.) die elektrisch leitfähige Trägerschicht oder xii.) an die zweite Klebemasseschicht C sowie an das leitfähige Substrat A angelegt werden.

Das Klebeband wird zuvor vorteilhafterweise als doppelseitiges Klebeband so verklebt, dass die elektrisch lösbare Klebemasseschicht D an das leitfähige Substrat A gebunden ist und die zweite Klebemasseschicht an das Substrat B, welches leitfähig sein kann, aber nicht muss.

Ohne an eine bestimmte Theorie gebunden sein zu wollen, wird von den Erfindern folgender Mechanismus angenommen: Durch das Anlegen der Spannung erfolgt eine Wanderung des Elektrolyten, insbesondere eine Trennung der Anionen und Kationen einer ionischen Flüssigkeit, in der Klebemasseschicht D. Hierdurch wird die Adhäsion der Klebemasseschicht D an das Substrat A stark herabgesetzt und es erfolgt ein Lösen dieser Schichten voneinander.

Gemäß bevorzugter Ausführungsformen der Erfindung ist xi.) nur die Trägerschicht elektrisch leitfähig. Hieran kann besonders gut eine Spannung angelegt werden, insbesondere und bevorzugt, wenn die Trägerschicht wenigstens eine der Klebemasseschichten seitlich überragt.

Gemäß weiterer bevorzugter Ausführungsformen der Erfindung sind xii.) die Trägerschicht und die zweite Klebemasseschicht C elektrisch leitfähig. Ein derartiger Aufbau hat den Vorteil, dass die Spannung an die Klebemasseschicht C angelegt werden kann. Ein seitlicher Überstand der Trägerschicht ist nicht notwendig. Das Klebeband lässt sich daher auf einfache Weise herstellen, insbesondere da die Schichten D, T und C gemeinsam gestanzt werden können.

Bevorzugt besteht das Klebeband gemäß der vorstehend beschriebenen Ausführungsformen aus den drei Schichten D, T und C. Hierfür wird im Rahmen der vorliegenden Anmeldung auch der Begriff Dreischichtverbund D-T-C verwendet.

Gemäß bevorzugter Ausführungsformen der vorliegenden Erfindung umfasst der verklebte Verbund somit folgende Schichten:
- Ein erstes Substrat A, welches elektrisch leitfähig ist; und
- Ein zweites Substrat B; und
- Ein erfindungsgemäßes Klebeband, welches aus dem Dreischichtverbund D-T-C besteht und die Substrate A und B so miteinander verklebt, dass die Klebemasseschicht D an das leitfähige Substrat A gebunden ist.

Gemäß weiterer bevorzugter Ausführungsformen umfasst das Klebeband zusätzlich zur ersten Klebemasseschicht D wenigstens die folgenden Schichten:
- Eine zweite Klebemasseschicht C; und
- wenigstens eine erste elektrisch leitfähige Trägerschicht T, die zwischen den Schichten D und C angeordnet ist; und
- wenigstens eine zweite elektrisch leitfähige Trägerschicht T', die auf der der ersten elektrisch leitfähigen Trägerschicht T gegenüberliegenden Fläche der Klebemasseschicht D angeordnet ist; und
- Eine dritte Klebemasseschicht C', die auf der der ersten Klebemasseschicht D gegenüberliegenden Fläche der zweiten elektrisch leitfähigen Trägerschicht T' angeordnet ist.

Ein derartiges Klebeband hat wenigstens den Schichtaufbau C-T-D-T'-C' und kann als doppelseitiges Klebeband über die Klebemasseschichten C und C' an eine Vielzahl unterschiedlicher Substrate angepasst werden.

Hierbei kann es sich prinzipiell um die gleichen Substrate handeln wie gemäß der vorherigen Ausführungsformen, in denen das Klebeband ein Transferklebeband ist oder den Dreischichtaufbau D-T-C hat.

Ein derartiges Klebeband kann insbesondere und vorteilhafterweise aber auch verwendet werden, um später Substrate A und B voneinander zu lösen, von denen keines elektrisch leitfähig ist.

Gemäß bevorzugter Ausführungsformen sind entweder xi.) nur die Trägerschichten T und T' oder xii.) die Trägerschichten T und T' und die zweite Klebemasseschicht C und/oder die dritte Klebemasseschicht C' elektrisch leitfähig ausgestaltet.

Hierdurch kann eine Spannung an xi.) die beiden elektrisch leitfähigen Trägerschichten oder xii.) an wenigstens eine der Klebemasseschichten C und C' und an eine der Trägerschichten oder die andere Klebemasseschicht angelegt werden.

Analog zu obigen Ausführungsformen wird angenommen, dass durch das Anlegen der Spannung eine Wanderung des Elektrolyten, insbesondere eine Trennung der Anionen und Kationen einer ionischen Flüssigkeit, in der Klebemasseschicht D erfolgt. Hierdurch wird die Adhäsion der Klebemasseschicht D an die elektrisch leitfähigen Trägerschichten T und T' stark herabgesetzt und es erfolgt ein Lösen dieser Schichten voneinander.

Gemäß bevorzugter Ausführungsformen der Erfindung sind xi.) nur die Trägerschichten T und T' elektrisch leitfähig. Hieran kann besonders gut eine Spannung angelegt werden, insbesondere und bevorzugt, wenn die Trägerschichten T und T' wenigstens eine der jeweils benachbarten Klebemasseschichten seitlich überragen.

Gemäß weiterer bevorzugter Ausführungsformen der Erfindung sind xii.) die Trägerschichten T und T' und die zweite und die dritte Klebemasseschicht C bzw. C' elektrisch leitfähig. Ein derartiger Aufbau hat den Vorteil, dass die Spannung an die Klebemasseschichten C und C' angelegt werden kann. Ein seitlicher Überstand der Trägerschichten T und T' ist nicht notwendig. Das Klebeband lässt sich daher auf einfache Weise herstellen, insbesondere da die Schichten C, T, D, T' und C' gemeinsam gestanzt werden können.

Bevorzugt besteht das Klebeband gemäß der vorstehend beschriebenen Ausführungsformen aus den fünf Schichten C, T, D, T' und C'. Hierfür wird im Rahmen der vorliegenden Anmeldung auch der Begriff Fünfschichtverbund C-T-D-T'-C' verwendet.

Gemäß bevorzugter Ausführungsformen der vorliegenden Erfindung umfasst der verklebte Verbund somit folgende Schichten:
- Ein erstes Substrat A; und
- Ein zweites Substrat B; und
- Ein erfindungsgemäßes Klebeband, welches aus dem Fünfschichtverbund C-T-D-T`-C' besteht und die Substrate A und B miteinander verklebt.

Das elektrisch leitfähige Substrat sämtlicher Ausführungsformen kann beispielsweise ein Gehäuse aus Metall von einem Mobiltelefon sein.

Bei dem elektrisch nicht leitfähigen Substrat sämtlicher Ausführungsformen kann es sich insbesondere um ein Gehäuse aus einem nicht leitfähigen Material, wie Plastik, oder eine Batterie oder andere nicht elektrisch leitfähig ausgestaltete Bauteile handeln, wie beispielsweise Lautsprecher.

Ein weiterer Gegenstand der vorliegenden Erfindung ist die Verwendung des erfindungsgemäßen Klebebands zur Verklebung von Bauteilen in elektronischen Geräten, Automobilen, medizinischen Geräten und zahnmedizinischen Geräten.

Die Trägerschichten T sowie T und T' sämtlicher vorstehend genannter Ausführungsformen sind elektrisch leitfähig.

Im Folgenden werden diese Schichten weiter ausgeführt. Der Einfachheit halber wird der Begriff "elektrisch leitfähige Trägerschicht" oder auch nur "Trägerschicht" verwendet. Dieser bezieht sich je nach den obigen Ausführungsformen auf die Trägerschicht T oder die Trägerschichten T und T'.

Die Trägerschichten T und T' sind unabhängig voneinander und können gleich oder verschieden voneinander ausgeführt sein.

Bevorzugt umfasst die elektrisch leitfähige Trägerschicht wenigstens ein Metall.

Besonders bevorzugt ist das Metall ausgewählt aus der Gruppe bestehend aus Kupfer, Nickel, Zink, Zinn, Silber, Gold, Aluminium, Eisen, Chrom und Legierungen dieser genannten Metalle. Ganz besonders bevorzugt ist das Metall ausgewählt aus der Gruppe bestehend aus Aluminium, Kupfer und Nickel.

Bevorzugt weist die elektrisch leitfähige Trägerschicht eine Schichtdicke, gemessen in z-Richtung, also parallel zur Stapelrichtung der Schichtanordnung, von 10 nm (Nanometer) bis 50 µm (Mikrometer) auf.

Die elektrisch leitfähige Trägerschicht weist gemäß bevorzugter Ausführungsformen der Erfindung a) wenigstens eine Metallfolie, bevorzugt eine Aluminiumfolie, und/oder b) wenigstens ein elektrisch leitfähiges Textil aufweisend wenigstens ein Metall, bevorzugt ausgewählt aus der Gruppe bestehend aus Kupfer und Nickel, und/oder c) eine oder mehrere Lagen wenigstens eines aufgedampften Metalls, bevorzugt ausgewählt aus der Gruppe bestehend aus Kupfer und Aluminium, und/oder d) wenigstens ein Gitter aus Metall und/oder e) eine mit Metall bedampfte Folie auf.

Es ist dabei prinzipiell auch denkbar, dass die Schicht T eine Kombination von zwei oder mehreren der genannten Möglichkeiten aufweist.

Metallfolien, wie beispielsweise und bevorzugt Aluminiumfolien, sind dem Fachmann bekannt.

Bevorzugt weist die Metallfolie, beispielsweise und bevorzugt die Aluminiumfolie, eine Schichtdicke, gemessen in z-Richtung, also parallel zur Stapelrichtung der Schichtanordnung, von 5 bis 50 µm, besonders bevorzugt von 10 bis 30 µm auf.

Elektrisch leitfähige Textilien sind dem Fachmann bekannt, insbesondere unter dem englischen Ausdruck "conductive mesh". Hierbei handelt es sich um ein textiles Gewebe, zum Beispiel aus PET (Polyethylenterephthalat), welches mit einem Metall, zum Beispiel mit Kupfer und/oder Nickel, beschichtet ist, wodurch die elektrische Leitfähigkeit des Gewebes hergestellt ist.

Dem Fachmann ist ebenfalls bekannt, dass Metalle direkt als Monolage oder Mehrfachlage auf Flächen, wie hier die Oberfläche einer Klebemasseschicht aufgedampft werden können. Im Rahmen der vorliegenden Erfindung kann die elektrisch leitfähige Trägerschicht durch Aufdampfen von Metall auf die Klebemasseschicht D oder die Klebemasseschicht C oder die Klebemasseschicht C' bereitgestellt werden.

Ferner sind dem Fachmann Gitter aus Metall unterschiedlicher Dimensionen bekannt. Metallgitter mit geeigneten Schichtdicken können beispielsweise durch ein Gelege aus entsprechend dünnen Metallfäden oder durch Stanzen wenigstens einer Folie entsprechender Schichtdicke hergestellt sein.

Bei einer mit Metall bedampften Folie wird insbesondere eine nicht leitfähige Folie mit Metall bedampft, um diese elektrisch leitfähig auszubilden. Das Material der Folie kann prinzipiell ausgewählt sein aus sämtlichen Materialien, die dazu geeignet sind mit Metall bedampft zu werden und als Trägerfolie in Klebebändern verwendet zu werden. Das Material ist insbesondere ausgewählt aus Polyestern und Polyolefinen, wobei auch eine Mischung mehrerer Materialien denkbar ist. Als Polyester sind insbesondere Polyethylenterephthalat (PET) und Polyethylennaphthalat (PEN) bevorzugt. Als Polyolefine sind insbesondere Polypropylen (PP), Polyethylen (PE) bevorzugt. Gemäß bevorzugter Ausführungsformen ist das Material der Folie ausgewählt aus der Gruppe bestehend aus PET, PEN, PE, PP. Bevorzugt handelt es sich um eine Folie aus PET (Polyethylenterephthalat). Eine derartige Folie ist dimensionsstabil und somit gut verarbeitbar, ohne sich signifikant zu dehnen oder zu zerreißen. Hierdurch ist es möglich eine homogene und lückenlose Metallschicht dauerhaft aufzubringen, sodass die elektrische Leitfähigkeit, insbesondere in z-Richtung, über die gesamte Folie dauerhaft gewährleistet ist.

In den Ausführungsformen, in denen wenigstens eine elektrisch leitfähige Trägerschicht T oder wenigstens zwei elektrisch leitfähige Trägerschichten T und T' vorhanden sind, ist es bevorzugt, dass diese wenigstens eine benachbarte Klebemasseschicht in wenigstens einer Erstreckungsrichtung der Schichtebene seitlich überragen und somit einen seitlichen Überstand aufweisen. An diesen seitlichen Überstand kann dann auf einfache Weise eine Spannung angelegt werden.

Im Fall des Fünfschichtverbundes sind die seitlichen Überstände der elektrisch leitfähigen Trägerschichten T und T' gemäß vorteilhafter Ausführungsformen räumlich getrennt voneinander angeordnet. Dies erleichtert es eine Spannung an diese beiden Überstände anzulegen.

Im Fall von aufgedampftem Metall als Trägerschicht ist es bevorzugt, dass diese Trägerschicht nur eine benachbarte Klebemasseschicht in wenigstens einer Erstreckungsrichtung der Schichtebene seitlich überragt und die jeweils andere Klebemasseschicht als mechanische Stütze dieser Metallschicht dient. Hierbei hat die Metallschicht keine eigentliche Trägerfunktion. Stattdessen fungiert die andere Klebemasseschicht als Träger für die Metallschicht. Der Einfachheit halber wird der Begriff Trägerschicht für die Metallschicht aber auch in diesen Ausführungsformen beibehalten. Bevorzugt beträgt die Schichtdicke der Schicht T in diesem Fall größer oder gleich 10 nm (Nanometer), bevorzugt 50 bis 200 nm.

Gemäß bevorzugter Ausführungsformen der Erfindung weist die elektrisch leitfähige Trägerschicht T bzw. T und/oder T' a) wenigstens eine Metallfolie, bevorzugt eine Aluminiumfolie, und/oder b) wenigstens ein elektrisch leitfähiges Textil aufweisend wenigstens ein Metall, bevorzugt ausgewählt aus der Gruppe bestehend aus Kupfer und Nickel, und/oder d) wenigstens ein Gitter aus Metall und/oder e) eine mit Metall bedampfte Folie auf, und überragt die erste Klebemasseschicht D und die zweite Klebemasseschicht C oder die erste Klebemasseschicht D und die zweite Klebemasseschicht C und/oder die erste Klebemasseschicht D und die dritte Klebemasseschicht C' in wenigstens einer Erstreckungsrichtung.

Hierdurch kann auf einfache und sichere Weise eine Spannung an die Trägerschicht angelegt werden. Gleichzeitig kann das Klebeband auf vergleichsweise einfache Weise hergestellt werden.

Gemäß bevorzugter Ausführungsformen der Erfindung weist die elektrisch leitfähige Trägerschicht T bzw. T und/oder T' eine oder mehrere Lagen, bevorzugt eine Lage, wenigstens eines aufgedampften Metalls, bevorzugt ausgewählt aus der Gruppe bestehend aus Kupfer und Aluminium, auf.

Gemäß besonders bevorzugter Ausführungsformen der Erfindung weist die elektrisch leitfähige Trägerschicht T bzw. T und/oder T' e) eine mit Metall bedampfte Folie auf, und überragt die erste Klebemasseschicht D in wenigstens einer Erstreckungsrichtung. Hierbei ist die Folie insbesondere auf einer Oberfläche mit Metall bedampft und die jeweilige Trägerschicht über die metallisierte Fläche an die erste Klebemasseschicht D, und damit an die elektrisch ablösbare Schicht, gebunden.

Hierdurch kann auf einfache und sichere Weise eine Spannung an die Trägerschicht angelegt werden.

Unter dem Ausdruck "seitlich überragen" ist im Rahmen der vorliegenden Erfindung jegliche Art von seitlichem Überstand der angesprochenen Schicht oder Schichten gemeint und bedeutet, dass sich die jeweils angesprochene Schicht insbesondere in der "xy"-Ebene und somit seitlich - senkrecht zur Stapelrichtung - weiter erstreckt als die Bezugsschicht. Anstelle des Begriffes "seitlicher Überstand" werden im Rahmen der vorliegenden Erfindung auch die Begriffe "seitliche Verlängerung" oder "seitlicher Verlängerungsabschnitt" verwendet.

Der Begriff "seitlich" ist hier auf jede Erstreckungsrichtung der Schichtebene "xy" senkrecht zur Stapelrichtung der Schichten "z" bezogen. Der Begriff ist damit insbesondere unabhängig von der geometrischen Form des Klebebandes in der "xy"-Ebene, welche zum Beispiel ein Rechteck, wie für Klebebänder üblich (s. oben), aber auch ein Quadrat oder ein Kreis sein kann.

Geringfügige Schwankungen der Maße der einzelnen Schichten in der "xy"-Ebene, die sich aufgrund des Stanzverfahrens oder ähnlichen formgebenden Verfahren ergeben, sind hiermit nicht angesprochen, insbesondere da solche geringfügigen Materialüberstände aufgrund der Dimensionen nicht dazu geeignet sind, planmäßig eine Spannung daran anzulegen.

Die Klebemasseschichten C bzw. C und C' können prinzipiell auf den gleichen Massen basieren wie die Klebemasseschicht D, wobei die Klebemassen der Schichten C bzw. C und C' keine Elektrolyten enthalten müssen, aber können. Bevorzugt enthalten die Schichten C bzw. C und C' keine Elektrolyten.

Gemäß einiger oben beschriebener Ausführungsformen des Dreischichtverbundes D-T-C ist die Klebemasseschicht C elektrisch leitfähig.

Gleichermaßen kann auch die Klebemasseschicht C und/oder die Klebemasseschicht C' des Fünfschichtverbundes C-T-D-T'-C' elektrisch leitfähig ausgestaltet sein.

Im Folgenden werden diese Schichten weiter ausgeführt. Der Einfachheit halber wird an geeigneten Stellen der Begriff "elektrisch leitfähige Klebemasseschicht" verwendet. Dieser bezieht sich je nach den obigen Ausführungsformen auf die Klebemasseschicht C oder die Klebemasseschichten C und/oder C'. Ferner wird der Einfachheit halber der Ausdruck "die Klebemasseschichten C bzw. C und/oder C‴ verwendet, womit die jeweiligen Schichten in den beschriebenen Ausführungsformen des Klebebandes umfassend wenigstens den Dreischichtverbund oder wenigstens den Fünfschichtverbund gemeint sind.

Die Klebemasseschichten C und C' sind unabhängig voneinander und können gleich oder verschieden voneinander sein.

Bevorzugt enthält die elektrisch leitfähige Klebemasseschicht hierzu wenigstens ein Metall, wie insbesondere Nickel, Kupfer, Silber, bevorzugt in Form von elektrisch leitfähigen Metallpartikeln und/oder metallisierten Partikeln, besonders bevorzugt Metallpartikeln. Metallisierte Partikel sind insbesondere und bevorzugt Glas- oder Polymerpartikel, die mit wenigstens einem Metall metallisiert sind, sodass die zuvor elektrisch nicht leitfähigen Partikel durch die Metallisierung elektrisch leitfähig ausgestaltet sind.

Besonders bevorzugt enthält die elektrisch leitfähige Klebemasseschicht elektrisch leitfähige Partikel, die ausgewählt sind aus der Gruppe bestehend aus Nickelpartikeln, Kupferpartikeln und versilberten Kupferpartikeln.

Gemäß besonders bevorzugter Ausführungsformen enthält die elektrisch leitfähige Klebemasseschicht Nickelpartikel.

Bevorzugt enthält die elektrisch leitfähige Klebemasseschicht 5 bis 40 Gew.-%, besonders bevorzugt 20 bis 40 Gew.-%, ganz besonders bevorzugt 25 bis 35 Gew.-%, an elektrisch leitfähigen Partikeln, insbesondere Metallpartikeln und/oder metallisierten Partikeln, bezogen auf 100 Gew.-%, bezogen auf 100 Gew.-% an enthaltenen Polymeren und Klebharzen.

Die elektrisch leitfähigen Partikel sollten bevorzugt nicht oder nicht deutlich größer sein als die jeweilige Dicke der elektrisch leitfähigen Klebemasseschicht in z-Richtung, gemessen mit dem Lichtmikroskop.

Bevorzugt weisen die elektrisch leitfähigen Partikel eine durchschnittliche Partikelgröße von 1 bis 10 µm, besonders bevorzugt von 1 bis 6 µm, wiederum bevorzugt von 3 bis 5 µm, wie insbesondere 4 µm, auf.

Die elektrisch leitfähige Klebemasseschicht ist insbesondere wenigstens in z-Richtung elektrisch leitfähig.

Sie kann aber auch in der xy-Ebene elektrisch leitfähig sein. Wenn die elektrisch leitfähige Klebemasseschicht lediglich in z-Richtung, nicht aber notwendigerweise in xy-Richtung elektrisch leitfähig ausgestaltet ist, ist gemäß bevorzugter Ausführungsformen, in denen ein Metall, insbesondere Metallpartikel, zugegeben werden, um die elektrische Leitfähigkeit zu erzielen, eine geringere Menge dieser Materialien notwendig. Hierdurch ist die Klebemasse hinsichtlich erforderlicher Leitfähigkeit, Klebkraft, Fließverhalten und der Kosten optimiert.

Eine Schicht gilt im Rahmen der vorliegenden Erfindung insbesondere dann als "elektrisch leitfähig", wenn der Widerstand kleiner als 1 Ohm ist, gemessen in der jeweiligen Richtung, hier insbesondere in z-Richtung, nach dem Standard MIL-DTL-83528C.

Unabhängig davon, ob die Klebemasseschichten C bzw. C und/oder C' elektrisch leitfähig ausgestaltet sind gelten folgende Ausführungen.

Die Klebemasseschichten C bzw. C und/oder C' sind gemäß bevorzugter Ausführungsformen der Erfindung wie die Klebemasseschicht D poly(meth)acrylat-basiert. Hierbei gelten sämtliche obige Ausführungen zu der Definition und Art und Menge von poly(meth)acrylat-basiert bzw. Poly(meth)acrylaten.

Gemäß bevorzugter Ausführungsformen der Erfindung wird in den Klebemasseschichten C bzw. C und/oder C' das gleiche Poly(meth)acrylat verwendet, wie in der Klebemasseschicht D.

Hierdurch können insbesondere ähnliche Substrate, hier als A und B bezeichnet, miteinander verklebt sein. Ferner wird hierdurch die Alterungs- und Temperaturbeständigkeit des Klebebandes erhöht.

Gemäß weiterer bevorzugter Ausführungsformen der Erfindung wird in den Klebemasseschichten C bzw. C und/oder C' ein Polymer verwendet, welches von dem in der Klebemasseschicht D verwendeten Poly(meth)acrylat verschieden ist.

Hierdurch können die Eigenschaften der leitfähigen Schicht besonders gut an das oder die Substrate angepasst werden, welches über die Klebemasseschicht C bzw. C und/oder C' verklebt ist. Dadurch, dass die Klebemasseschicht C bzw. C und/oder C' bevorzugt keinen Elektrolyten, wie eine ionische Flüssigkeit enthält bzw. enthalten muss, müssen die Bestandteile hierauf nicht abgestimmt werden.

Gemäß weiterer bevorzugter Ausführungsformen der Erfindung wird in den Klebemasseschichten C bzw. C und/oder C' somit ein Poly(meth)acrylat verwendet, welches von dem in der Klebemasseschicht D verwendeten Poly(meth)acrylat verschieden ist.

Gemäß weiterer bevorzugter Ausführungsformen der Erfindung ist in den Klebemasseschichten C bzw. C und/oder C' wenigstens ein Vinylaromatenblockcopolymer enthalten.

Gemäß bevorzugter Ausführungsformen der Erfindung basieren die Klebemasseschichten C bzw. C und/oder C' auf Vinylaromatenblockcopolymer(en), das heißt, dass gemäß dieser Ausführungsformen Vinylaromatenblockcopolymere die Hauptpolymere in der Klebemasseschicht darstellen und hierbei zu 70 bis 100 Gew.-% enthalten sind, und zwar bezogen auf 100 Gew.-% an in der Schicht C enthaltenen Polymeren.

Etwaige in der Klebemasseschicht enthaltenen Klebharze werden im Rahmen dieser Berechnung nicht zu den 100 Gew.-% an enthaltenen Polymeren gezählt.

Bei dem bzw. den Vinylaromatenblockcopolymer(en) kann es sich prinzipiell um jegliche dem Fachmann bekannten Typen handeln.

Bevorzugt haben die Vinylaromatenblockcopolymere den Aufbau A-B, A-B-A und/oder (AB)ₙX, wobei X für einen Rest eines Kopplungsreagenzes oder Initiators steht und n größer oder gleich 2 ist.

Besonders bevorzugt haben das oder die Vinylaromatenblockcopolymere den Aufbau A-B-A, optional im Gemisch mit Anteilen an A-B, wobei letztere den Diblockanteil darstellen.

Ganz besonders bevorzugt liegen das oder die Vinylaromatenblockcopolymere als Gemisch von Polymeren des Aufbaus A-B-A mit Polymeren des Aufbaus A-B vor.

Die Blöcke A stellen die aus Vinylaromaten-Monomeren hergestellten Blöcke dar.

Bevorzugt sind die Blöcke A hergestellt aus einer Polymerisationsmischung enthaltend wenigstens Styrol und α-Methylstyrol, bevorzugt hergestellt aus einer Polymerisationsmischung enthaltend wenigstens Styrol. Ganz besonders bevorzugt sind die Blöcke A aus Styrol hergestellte Blöcke und damit Polystyrol-Blöcke.

Die Blöcke B stellen die übrigen Blöcke des Block-Copolymers dar. Bevorzugt sind die Blöcke B hergestellt aus einer Polymerisationsmischung enthaltend Monomere von 1,3-Dienen und Isobutylen, weiter bevorzugt hergestellt aus einer Polymerisationsmischung enthaltend Butadien und/oder Isopren. Ganz besonders bevorzugt sind die Blöcke B aus Butadien hergestellte Blöcke und damit Polybutadien-Blöcke.

Besonders bevorzugt handelt es sich bei dem oder den Vinylaromatenblockcopolymer(en) um Styrolblockcopolymer(e), wiederum bevorzugt Styrolbutadien-Blockcopolymere des Aufbaus A-B-A und optionalen Anteilen an A-B.

Hiermit wird die der Erfindung zugrunde liegende Aufgabe besonders gut gelöst.

Gemäß besonders vorteilhafter Ausführungsformen weist die Haftklebmasseschicht als Vinylaromatenblockcopolymer eine Mischung aus wenigstens zwei Styrolbutadien-Blockcopolymeren auf, wobei ein erstes Blockcopolymer einen Diblockanteil A-B von 50 bis 85 % aufweist und ein zweites Blockcopolymer einen Diblockanteil A-B von 5 bis 35 % aufweist.

Hiermit wird die der Erfindung zugrunde liegende Aufgabe besonders gut gelöst.

Der Diblock-Anteil wird mittels GPC bestimmt und kann wie dem Fachmann bekannt durch die Wahl geeigneter Herstellverfahren gezielt eingestellt werden.

Bevorzugt beträgt das Gewichtsmittel der Molekulargewichtsverteilung Mw (gemäß GPC) der A-B-A Polymerstränge des oder der enthaltenen Vinylaromatenblockcopolymere von 50.000 g/mol bis 300.000 g/mol, besonders bevorzugt von 80.000 bis 180.000 g/mol.

Wie oben ausgeführt können die Klebemasseschichten C und C' gleich oder verschieden voneinander sein. Beispielsweise kann eine der Klebemasseschichten, zum Beispiel C, aus einer Acrylat-basierte Klebemasse aufgebaut sein, während die andere Schicht, im selben Beispiel C', auf einer Klebemasse aufgebaut ist, die auf Vinylaromatenblockcopolymer(en) basiert.

Gemäß bevorzugter Ausführungsformen der Erfindung weisen die Klebemasseschichten C bzw. C und/oder C' wenigstens ein Klebharz auf, insbesondere wenn sie auf Vinylaromatenblockcopolymeren als Hauptpolymere basiert.

Hierdurch wird die Klebrigkeit der Klebemasse erhöht, und zwar so, dass die Klebemasseschicht(en) C bzw. C und/oder C' weiterhin elektrisch leitfähig sein kann bzw. können.

Unter einem "Klebharz" wird gemäß dem Verständnis des Fachmanns ein oligomeres oder polymeres Harz verstanden, das die Adhäsion (den Tack, die Eigenklebrigkeit) der Klebemasseschicht im Vergleich zu der kein Klebharz enthaltenden, ansonsten aber identischen Klebemasseschicht erhöht.

Bevorzugt weist das wenigstens eine Klebharz ein gewichtsmittleres Molekulargewicht M_{w} von 400 bis 15.000 g/mol, besonders bevorzugt von 400 bis 5.000 g/mol, ganz besonders bevorzugt von 500 bis 2.000 g/mol, auf.

Bevorzugt ist das wenigstens eine Klebharz ausgewählt aus der Gruppe bestehend aus nicht hydrierten, partiell oder vollständig hydrierten Harzen auf Basis von Kolophonium oder Kolophoniumderivaten, hydrierten Polymerisaten des Dicyclopentadiens, nicht hydrierten, partiell, selektiv oder vollständig hydrierten Kohlenwasserstoffharzen auf Basis von C-5, C-5/C-9 oder C-9 Monomergemischen und Polyterpenharzen auf Basis von α-Pinen und/oder β-Pinen und/oder δ-Limonen.

Dem Fachmann ist klar, dass er ein solches Klebharzes wählen kann, welches sich insbesondere mit dem oder den Vinylaromatenblockcopolymer(en) homogen vermischen lässt.

Die Klebemasse der Klebemasseschichten C bzw. C und/oder C' kann ferner weitere übliche Additive, wie Weichmacher und Füllstoffe enthalten.

Gemäß bevorzugter Ausführungsformen ist auch die Klebemasse der Klebemasseschichten C bzw. C und/oder C' geschäumt.

Hierdurch ist die Schockbeständigkeit des erfindungsgemäßen Klebebandes und damit auch des verklebten Verbundes weiter verbessert. Somit ist sichergestellt, dass es nicht zu einer vorzeitigen unerwünschten Ablösung der Substrate voneinander kommt, insbesondere wenn Kräfte, durch z.B. Fallenlassen, auf den verklebten Verbund einwirken.

Bevorzugt ist auch die Schäumung der Klebemasse der Klebemasseschichten C bzw. C und/oder C' mittels Expandierens von expandierbaren Mikroballons hergestellt.

Da die Klebemasseschichten C bzw. C und/oder C' keine Elektrolyten enthalten müssen bzw. nicht elektrisch ablösbar sein müssen, können sämtliche dem Fachmann bekannten Mikroballon-Typen verwendet werden.

Gemäß bevorzugter Ausführungsformen der Erfindung ist auch die Klebemasse der Klebemasseschichten C bzw. C und/oder C' geschäumt, wobei die Schäumung mittels Mikroballons hergestellt ist, wobei die Mikroballons an ihrer Oberfläche eine Schicht aus Silikat oder Alumosilikat aufweisen und bevorzugt als expandierbare Mikroballons in die Klebemasse eingemischt werden.

Bevorzugt ist die Klebemasse der Klebemasseschicht D eine Haftklebemasse und die Klebemasseschicht D damit bevorzugt eine Haftklebemasseschicht D.

Hierdurch lässt sich das Klebeband an dieser Seite leicht verkleben, insbesondere da im Vergleich zu hitzeaktivierbaren Klebesystemen kein Wärmeeintrag erforderlich ist. Ferner wandern die Bestandteile des Elektrolyten, wie insbesondere die Ionen von ionischen Flüssigkeiten, in Haftklebemassen schneller aufgrund der vergleichsweise geringen Vernetzungsdichten.

Die Klebemasse der Klebemasseschichten C bzw. C und/oder C' ist gemäß bevorzugter Ausführungsformen keine Haftklebemasse.

Gemäß weiterer bevorzugter Ausführungsformen der Erfindung ist die Klebemasse der Klebemasse der Klebemasseschichten C bzw. C und C' eine Haftklebemasse und die Klebemasseschicht C bzw. C und C' damit eine Haftklebemasseschicht.

In den Ausführungsformen, in denen alle äußeren Klebemasseschichten Haftklebemasseschichten sind, handelt es sich bei dem erfindungsgemäßen Klebeband um ein Haftklebeband.

Unter einer Haftklebemasse wird vorliegend erfindungsgemäß, wie allgemein üblich, ein Stoff verstanden, der - insbesondere bei Raumtemperatur - dauerhaft klebrig sowie klebfähig ist. Charakteristisch für eine Haftklebemasse ist, dass sie durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art der Haftklebemasse, der Temperatur und der Luftfeuchtigkeit sowie dem Substrat, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebemassen haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad der Haftklebemasse als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA, gemäß DIN EN ISO 6721) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.

Der Speichermodul G' ist wie folgt definiert: G' = (τ/γ) • cos(δ) (τ = Schubspannung, γ = Deformation, δ = Phasenwinkel = Phasenverschiebung zwischen Schubspannungs- und Deformationsvektor).

Die Definition des Verlustmoduls G" lautet: G" = (τ/γ) •sin(δ) (τ = Schubspannung, γ = Deformation, δ = Phasenwinkel = Phasenverschiebung zwischen Schubspannungs- und Deformationsvektor).

Ein Stoff gilt im Allgemeinen als haftklebrig und wird im Sinne der Erfindung als haftklebrig definiert, wenn bei Raumtemperatur, hier definitionsgemäß bei 23°C, im Deformationsfrequenzbereich von 10⁰ bis 10¹ rad/sec G' zumindest zum Teil im Bereich von 10³ bis 10⁷ Pa liegt und wenn G" ebenfalls zumindest zum Teil in diesem Bereich liegt. "Zum Teil" heißt, dass zumindest ein Abschnitt der G'-Kurve innerhalb des Fensters liegt, das durch den Deformationsfrequenzbereich von einschließlich 10⁰ bis einschließlich 10¹ rad/sec (Abszisse) sowie den Bereich der G'-Werte von einschließlich 10³ bis einschließlich 10⁷ Pa (Ordinate) aufgespannt wird. Für G" gilt dies entsprechend.

Bevorzugt weist die Haftklebemasse im Deformationsfrequenzbereich von 10⁰ bis 10¹ rad/sec bei 23 °C einen Speichermodul G' und einen Verlustmoduls G" im Bereich von 10³ bis 10⁷ Pa, bestimmt gemäß DIN EN ISO 6721, auf.

Zur Erzielung der viskoelastischen Eigenschaften werden die Monomere, auf denen die der Haftklebemasse zugrundeliegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765) unterhalb der Anwendungstemperatur (also üblicherweise unterhalb der Raumtemperatur (23 °C)) aufweist. Durch geeignete kohäsionssteigernde Maßnahmen, wie beispielsweise Vernetzungsreaktionen (Ausbildung brückenbildender Verknüpfungen zwischen den Makromolekülen), kann der Temperaturbereich, in dem eine Polymermasse haftklebrige Eigenschaften aufweist, vergrößert und/oder verschoben werden. Der Anwendungsbereich der Haftklebemassen kann somit durch eine Einstellung zwischen Fließfähigkeit und Kohäsion der Masse optimiert werden.

Bevorzugt weist die Haftklebemasse eine Glasübergangstemperatur von ≤ 23 °C, bestimmt gemäß DIN 53765, auf.

Im Unterschied zu Haftklebemassen weisen Heißschmelzklebstoffe, z.B. auf der Basis von Polyamiden, Polyurethanen oder modifizierten Polyethylenen, bei Raumtemperatur (23 °C) keine Klebrigkeit auf, wiewohl auch in Heißschmelzklebstoffzusammensetzungen.

Ein weiterer Gegenstand der vorliegenden Erfindung ist ein Verfahren zur Herstellung des erfindungsgemäßen Klebebandes. Das Verfahren umfasst in einer ersten bevorzugten Ausführungsform wenigstens folgende Verfahrensschritte:
A) Bereitstellung einer ersten Klebemasseschicht D, wobei die Klebemasseschicht D wenigstens ein Elektrolyt und expandierbare Mikroballons enthält, wobei die expandierbaren Mikroballons an ihrer Oberfläche eine Schicht aus Silikat oder Alumosilikat aufweisen; und
E) Schäumen der ersten Klebemasseschicht D, wobei das Schäumen durch Expansion der expandierbaren Mikroballons erfolgt.

Gemäß bevorzugter Ausführungsformen der Erfindung umfasst das Verfahren wenigstens folgende Verfahrensschritte:
A) Bereitstellung einer ersten Klebemasseschicht D, wobei die Klebemasseschicht D wenigstens ein Elektrolyt und expandierbare Mikroballons enthält, wobei die expandierbaren Mikroballons an ihrer Oberfläche eine Schicht aus Silikat oder Alumosilikat aufweisen; und
B) Bereitstellung einer zweiten Klebemasseschicht C; und
C) Bereitstellung einer elektrisch leitfähigen Trägerschicht T; und
D) Laminieren der bereitgestellten Schichten D, T und C aufeinander, wobei die Schichten so miteinander in Kontakt gebracht werden, dass die elektrisch leitfähige Trägerschicht T zwischen den Schichten D und C angeordnet ist, sodass ein Schichtverbund DTC als doppelseitiges Klebeband erhalten wird; und
E) Schäumen der ersten Klebemasseschicht D, wobei das Schäumen durch Expansion der expandierbaren Mikroballons erfolgt.

Der Verfahrensschritt A) sämtlicher Ausführungsformen umfasst insbesondere und bevorzugt folgende Teilschritte:
A1) Bereitstellung einer Klebemasse; und
A2) Bereitstellung wenigstens eines Elektrolyten; und
A3) Bereitstellung von expandierbaren Mikroballons, wobei die expandierbaren Mikroballons an ihrer Oberfläche eine Schicht aus Silikat oder Alumosilikat aufweisen; und
A4) Zugabe der Mikroballons zu der Klebemasse; und
A5) Zugabe des Elektrolyten zu der Klebemasse.

Das Bereitstellen der ersten Klebemasse gemäß Schritt A1) erfolgt insbesondere dadurch, dass wenigstens ein Polymer bereitgestellt wird, welches optional weitere Bestandteile enthalten kann.

Für die Klebemasse, den Elektrolyten und die expandierbaren Mikroballons gelten sämtliche obige Ausführungen in Bezug auf die Klebemasseschicht D.

Die Auflistung der Schritte A2) bis A5) stellt nicht zwangsweise eine zeitliche Reihenfolge dar. So kann auch zuerst der Elektrolyt, wie insbesondere wenigstens eine ionische Flüssigkeit, zu der Klebemasse gegeben und erst im Anschluss die expandierbaren Mikroballons zugegeben werden.

Gemäß einer weiteren Ausführungsform der Erfindung umfasst das Verfahren zur Herstellung des erfindungsgemäßen Klebebandes. die folgenden Verfahrensschritte:
X1) Bereitstellung einer Klebemasse; und
X2) Bereitstellung wenigstens eines Elektrolyten; und
X3) Bereitstellung von vorexpandierten Mikroballons, wobei die vorexpandierten Mikroballons an ihrer Oberfläche eine Schicht aus Silikat oder Alumosilikat aufweisen; und
X3) Zugabe der Mikroballons zu der Klebemasse; und
X4) Zugabe des Elektrolyten zu der Klebemasse.

Für die Klebemasse, den Elektrolyten und die vorexpandierten Mikroballons gelten sämtliche obige Ausführungen in Bezug auf die Klebemasseschicht D.

Die Auflistung der Schritte X2) bis X5) stellt nicht zwangsweise eine zeitliche Reihenfolge dar. So kann auch zuerst der Elektrolyt, wie insbesondere wenigstens eine ionische Flüssigkeit, zu der Klebemasse gegeben und erst im Anschluss die vorexpandierten Mikroballons zugegeben werden.

Die Klebemasse wird mittels bekannter Verfahren in Schichtform gebracht, insbesondere durch Ausstreichen.

Ferner können ggf. einer oder mehrere Trocknungsschritte erfolgen.

Das Bereitstellen der zweiten Klebemasseschicht C gemäß Schritt B) erfolgt insbesondere dadurch, dass wenigstens eine weitere Klebemasse bereitgestellt wird.

Die Klebemasse wird mittels bekannter Verfahren in Schichtform gebracht, insbesondere durch Ausstreichen.

Ferner können ggf. einer oder mehrere Trocknungsschritte erfolgen.

Das Laminieren gemäß Schritt D) erfolgt auf dem Fachmann bekannte Weise, wobei die Schichten so aufeinandergelegt werden, dass ein Schichtverbund DTC als doppelseitiges Klebeband erhalten wird, wobei T zwischen D und C angeordnet ist.

Das Bereitstellen der Trägerschicht T gemäß Schritt C) kann wie oben bereits ausgeführt auf verschiedene Weise erfolgen.

So ist es denkbar, dass a) eine Metallfolie, insbesondere eine Aluminiumfolie, und/oder b) ein elektrisch leitfähiges Netz und/oder d) wenigstens ein Gitter aus Metall und/oder e) eine mit Metall bedampfte PET-Folie zwischen den Schichten D und C platziert wird.

Ferner können c) Metallpartikel direkt auf die Oberfläche der Klebemasseschicht D oder C aufgedampft werden.

Die Auflistung der Verfahrensschritte A) bis C) stellt somit nicht zwangsweise eine zeitliche Reihenfolge dar.

Das Schäumen der Klebemasseschicht D gemäß Verfahrensschritt E) kann zeitlich vor dem Laminieren gemäß Schritt D) erfolgen oder im Anschluss daran.

Gemäß bevorzugter Ausführungsformen werden der Klebemasse der Klebemasseschicht C bei deren Bereitstellung gemäß Schritt B) ebenfalls expandierbare Mikroballons zugegeben. Die Expansion wird insbesondere und bevorzugt dadurch erzielt, dass die zu schäumende Schicht oder zu schäumenden Schichten auf die entsprechende Temperatur, die zur Expansion der verwendeten Mikroballons notwendig ist, erwärmt werden.

Insbesondere in den Fällen, in denen auch die Schicht C expandierbare Mikroballons enthält, ist es bevorzugt, dass die Expansion gemäß Schritt E) zeitlich nach dem Laminieren gemäß Schritt D) erfolgt, da somit die Schichten D und C zeit- und energiesparend zeitgleich erwärmt und somit geschäumt werden können.

Das Verfahren zur Herstellung des Klebebandes in der Ausführungsform des Fünfschichtverbundes umfasst analoge Schritte, wobei zusätzlich die Schichten T' und C' bereitgestellt und ebenfalls in den Verbund laminiert werden.

Das erfindungsgemäße Klebeband stellt insbesondere ein doppelseitiges Klebeband dar, bei dem je nach Ausführungsform zwei Flächen der Klebemasseschicht D (Transferklebeband) oder eine Fläche der ersten Klebemasseschicht D und eine Fläche der zweiten Klebemasseschicht C (Dreischichtverbund D-T-C) oder jeweils eine Fläche der Klebemasseschichten C und C' (Fünfschichtverbund C-T-D-T'-C') jeweils zum Verkleben von Substraten verfügbar sind.

Vorteilhaft können die äußeren, frei liegenden Flächen der Klebemasseschichten des erfindungsgemäßen Klebebandes mit antiadhäsiven Materialien ausgerüstet sein wie mit einem Trennpapier oder einer Trennfolie, auch Liner genannt. Bei einem Liner kann es sich auch um mindestens einseitig, vorzugsweise beidseitig, antiadhäsiv beschichtetes Material handeln, wie beispielsweise beidseitig silikonisiertes Material. Ein Liner, bzw. allgemeiner formuliert, ein temporärer Träger, ist nicht Bestandteil eines Klebebands, sondern nur ein Hilfsmittel zu dessen Herstellung, Lagerung und/oder für die Weiterverarbeitung durch Stanzen. Darüber hinaus ist ein Liner im Gegensatz zu einem permanenten Träger nicht fest mit einer Klebstoffschicht verbunden, sondern fungiert vielmehr als temporärer Träger, d.h. als Träger, der von der Klebstoffschicht abziehbar ist. "Permanente Träger" werden in der vorliegenden Anmeldung synonym auch einfach "Träger" genannt.

Die Dicke der einzelnen Klebemasseschicht(en) (in z-Richtung) beträgt bevorzugt von 15 bis 150 µm, besonders bevorzugt von 20 bis 100 µm, ganz besonders bevorzugt von 25 bis 70 µm.

In den Ausführungsformen des Dreischichtverbundes D-T-C sowie des Fünfschichtverbundes C-T-D-T'-C' weisen die Klebemasseschichten D und C bzw. D und C sowie D und C' gemäß bevorzugter Ausführungsformen unterschiedliche Schichtdicken auf, wobei die Dicke der Klebemasseschicht D beispielsweise geringer ist als die der Klebemasseschichten C bzw. C und C'.

Gemäß weiterer bevorzugter Ausführungsformen weisen die Schichten D und C bzw. D, C und C' die gleiche Schichtdicke auf.

Wenn die Schichtdicke der Schicht D zu hoch ist, wird diese aufgrund der enthaltenen Elektrolyten ggf. unwirtschaftlich teuer.

Nachfolgend werden bevorzugte Ausführungsformen der Erfindung unter Bezugnahme auf die beiliegenden Figuren näher erläutert und beschrieben. Dabei zeigen:
Fig. 1 eine vereinfachte schematische Querschnittsdarstellung durch ein erfindungsgemäßes doppelseitiges Klebeband in einer bevorzugten Ausführungsform; und
Fig. 2 eine vereinfachte schematische Querschnittsdarstellung durch ein erfindungsgemäßes doppelseitiges Klebeband in einer bevorzugten Ausführungsform; und
Fig. 3 eine vereinfachte schematische Querschnittsdarstellung durch ein erfindungsgemäßes doppelseitiges Klebeband in einer bevorzugten Ausführungsform; und
Fig. 4 eine vereinfachte schematische Querschnittsdarstellung durch einen erfindungsgemäßen verklebten Verbund einer bevorzugten Ausführungsform; und
Fig. 5 eine vereinfachte schematische Querschnittsdarstellung durch einen erfindungsgemäßen verklebten Verbund, an den eine Spannung angelegt ist, in einer bevorzugten Ausführungsform; und
Fig. 6 eine vereinfachte schematische Querschnittsdarstellung durch einen erfindungsgemäßen verklebten Verbund, nachdem eine Spannung angelegt wurde und
hierdurch eine adhäsive Spaltung erfolgt ist; und
Fig. 7 eine vereinfachte schematische Querschnittsdarstellung durch einen erfindungsgemäßen verklebten Verbund einer bevorzugten Ausführungsform; und
Fig. 8 eine vereinfachte schematische Querschnittsdarstellung durch einen erfindungsgemäßen verklebten Verbund einer bevorzugten Ausführungsform.

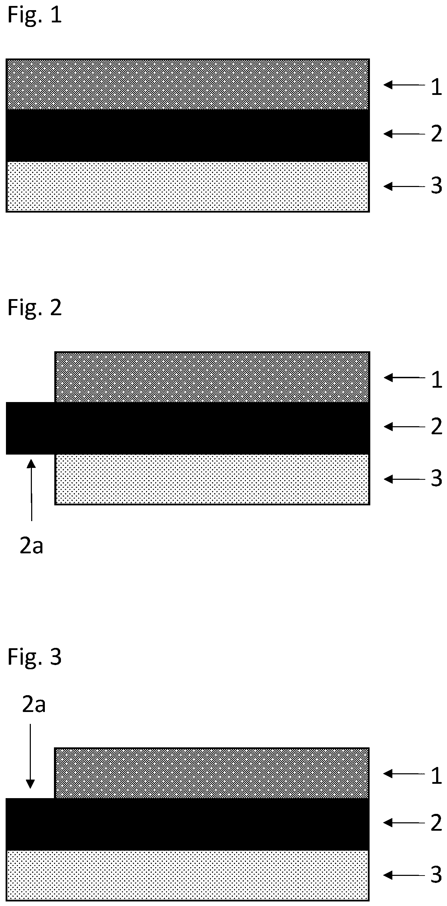

Wie in Fig. 1 erkennbar ist die Klebemasseschicht D 1 über eine ihrer Flächen mit der Trägerschicht T 2 verbunden. Auf der der Schicht D gegenüberliegenden Fläche der Trägerschicht T ist die zweite Klebemasseschicht C 3 angeordnet.

Wie in Fig. 1 ebenfalls erkennbar stellt der Schichtverbund ein doppelseitiges Klebeband dar, bei dem eine Fläche der Klebemasseschicht D und eine Fläche der zweiten Klebemasseschicht C jeweils zum Verkleben verfügbar sind.

In Fig. 2 ist eine bevorzugte Ausführungsform der Erfindung dargestellt. Hierbei überragt die elektrisch leitfähige Trägerschicht T 2 die Klebemasseschicht D 1 und die zweite Klebemasseschicht C 3 in wenigstens einer Erstreckungsrichtung der Schichtebene seitlich, sodass die elektrisch leitfähige Trägerschicht T 2 einen Überstand mit wenigstens einer freien Fläche 2 a aufweist.

In Fig. 3 ist eine weitere bevorzugte Ausführungsform der Erfindung dargestellt. Hierbei überragt die elektrisch leitfähige Trägerschicht T 2 die Klebemasseschicht D 1 in wenigstens einer Erstreckungsrichtung der Schichtebene seitlich, sodass die elektrisch leitfähige Trägerschicht T 2 einen Überstand mit einer freien Fläche 2 a aufweist. In Fig 3 ist die Klebemasseschicht C 3 so ausgebildet, dass sie ebenfalls einen Überstand relativ zur Schicht D 1 aufweist. Bei der Trägerschicht T 2 handelt es sich insbesondere um eine einseitig mit Aluminium beschichtete PET-Folie, wobei die aluminisierte Seite an die Schicht D 1 gebunden ist.

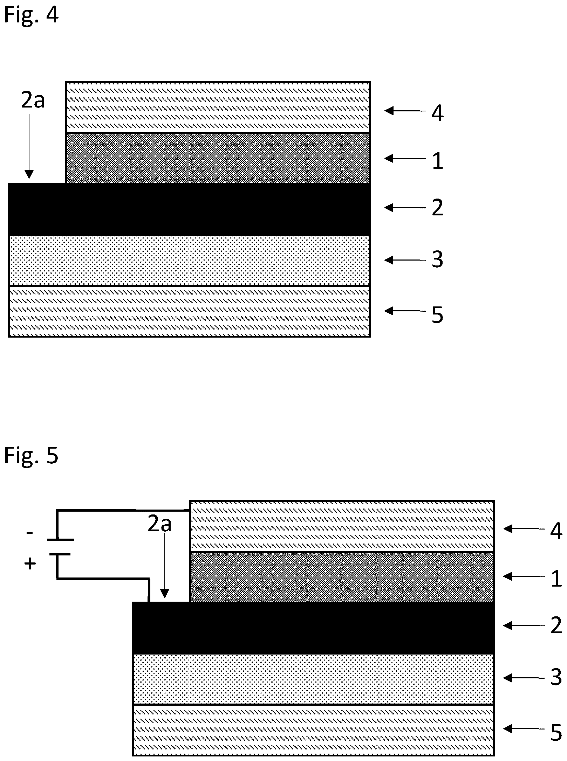

In Fig. 4 ist eine schematische Darstellung des erfindungsgemäßen verklebten Verbundes in einer bevorzugten Ausführungsform abgebildet. Wie anhand von Fig. 4 erkennbar, ist das Klebeband über die Klebemasseschicht D 1 auf einer Fläche des ersten Substrates A 4 angeordnet, wobei das erste Substrat elektrisch leitfähig ist.

Ferner ist das Klebeband über die zweite Klebemasseschicht C 3 auf einer Fläche eines zweiten Substrates B 5 angeordnet.

In Fig. 4 ist ebenfalls beispielhaft dargestellt, dass die elektrisch leitfähige Trägerschicht T 2 die Klebemasseschicht D 1 in wenigstens einer Erstreckungsrichtung der Schichtebene seitlich überragt, sodass die elektrisch leitfähige Trägerschicht T einen Überstand mit einer freien Fläche 2 a aufweist.

Über diese freie Fläche 2a kann nun eine Spannung angelegt werden, wie in der schematischen Darstellung gemäß Fig. 5 gezeigt.

Durch das Anlegen der Spannung erfolgt eine Wanderung des Elektrolyten, insbesondere eine Trennung der Anionen und Kationen einer ionischen Flüssigkeit, in der Klebemasseschicht D 1.

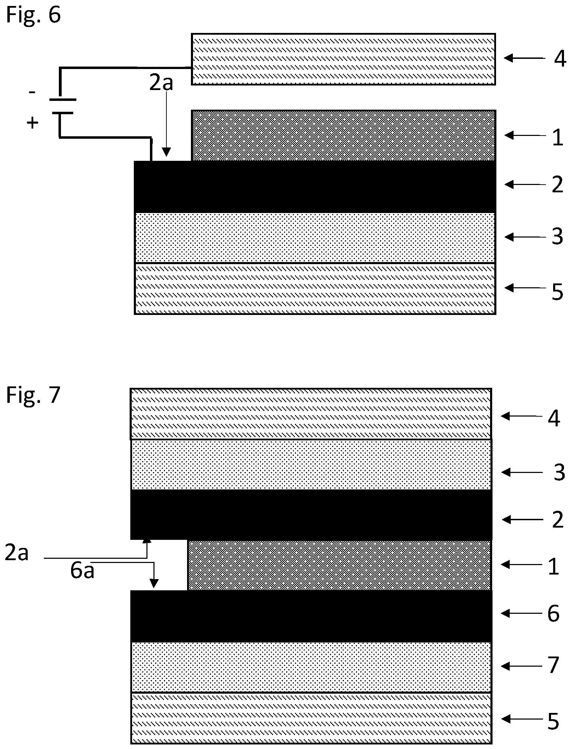

Hierdurch wird die Adhäsion der Klebemasseschicht D 1 an das Substrat A 4 stark herabgesetzt und es erfolgt ein Lösen dieser Schichten voneinander, wie an der schematischen Darstellung gemäß Fig. 6 erkennbar.

In Fig. 7 ist eine weitere schematische Darstellung des erfindungsgemäßen verklebten Verbundes in einer bevorzugten Ausführungsform abgebildet. Wie anhand von Fig. 7 erkennbar, ist das Klebeband über die Klebemasseschicht C 3 auf einer Fläche des ersten Substrates A 4 angeordnet.

Ferner ist das Klebeband über die dritte Klebemasseschicht C' 7 auf einer Fläche eines zweiten Substrates B 5 angeordnet.

Zwischen den Schichten C 3 und C' 7 befinden sich die elektrisch ablösbare Klebemasseschicht D 1 sowie zwei elektrisch leitfähige Trägerschichten T 2 und T' 6, wobei die Schicht D 1 zwischen den Trägerschichten angeordnet ist.

In Fig. 7 ist ebenfalls beispielhaft dargestellt, dass die elektrisch leitfähige Trägerschicht T 2 sowie die elektrisch leitfähige Trägerschicht T' 6 die Klebemasseschicht D 1 jeweils in wenigstens einer Erstreckungsrichtung der Schichtebene seitlich überragen, sodass die elektrisch leitfähige Trägerschicht T einen Überstand mit einer freien Fläche 2a und die elektrisch leitfähige Trägerschicht T' einen Überstand mit einer freien Fläche 6a aufweist.

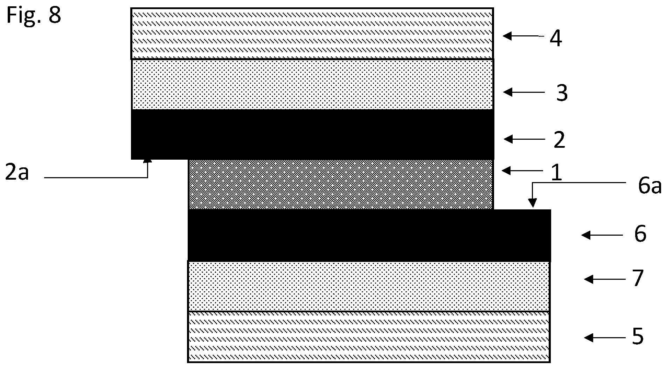

In Fig. 8 ist eine weitere schematische Darstellung des erfindungsgemäßen verklebten Verbundes in einer bevorzugten Ausführungsform abgebildet, welche der Darstellung gemäß Fig. 7 ähnlich ist. Im Unterschied zu Fig. 7 zeigen die Überstände der elektrisch leitfähigen Trägerschicht T 2 und der elektrisch leitfähigen Trägerschicht T' 6 jedoch in unterschiedliche Richtungen, sodass die resultierenden freien Flächen dieser Schichten 2a bzw. 6a räumlich getrennt sind.

Über diese freien Flächen 2a und 6a kann nun eine Spannung angelegt werden, analog zu Figur 5. Im Unterschied zur Ausführungsform gemäß Figur 5 kann die Spannung an die Flächen 2a und 6a angelegt werden, sodass keines der Substrate A und B elektrisch leitfähig sein muss.

Durch das Anlegen der Spannung erfolgt eine Wanderung des Elektrolyten, insbesondere eine Trennung der Anionen und Kationen einer ionischen Flüssigkeit, in der Klebemasseschicht D 1. Hierdurch wird die Adhäsion der Klebemasseschicht D 1 an die Trägerschichten T 2 und/oder T' 6 stark herabgesetzt und es erfolgt ein Lösen dieser Schichten voneinander. Insbesondere erfolgt ein Ablösen an die Schicht, an welche der Minuspol angelegt wird.

Das Anlegen der Spannung ist im Fall der räumlich getrennten Flächen 2a und 6a gemäß Fig. 8 vereinfacht.

Die Darstellungen in den Fig. 1 bis 8 sind wie ausgeführt schematische Darstellungen. Insbesondere können die Schichtdicken der einzelnen Schichten D, T und C voneinander abweichen. Ferner sind auch die Substrate A und B lediglich schematisch als weitere Schichten dargestellt. Diese können selbstverständlich jegliche andere räumliche Geometrie aufweisen.

Im Folgenden werden einige Beispiele beschrieben, um die Erfindung weiter zu verdeutlichen.

### Prüfmethoden

Alle Messungen werden, sofern nichts anderes angegeben ist, bei 23 °C und 50 % relativer Luftfeuchtigkeit durchgeführt. Die mechanischen und klebtechnischen Daten wurden wie folgt ermittelt:

### Molekulargewicht M_{n,} M_{w}

Die Angaben des zahlenmittleren Molekulargewichts Mₙ bzw. gewichtsmittleren Molekulargewichts M_{w} in dieser Schrift beziehen sich auf die Bestimmung per Gelpermeationschromatographie (GPC). Die Bestimmung erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µm, 10³ Å, 8,0 mm * 50 mm (Angaben hier und im Folgenden in der Reihenfolge: Typ, Partikelgrösse, Porosität, Innendurchmesser * Länge; 1 Å = 10⁻¹⁰ m) verwendet. Zur Auftrennung wird eine Kombination der Säulen des Typs PSS-SDV, 5 µm, 10³ Å sowie 10⁵ Å und 10⁶ Å mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bei polaren Molekülen wie zum Beispiel den Ausgangsstoffen des Polyurethans gegen PMMA-Standards (Polymethylmethacrylat-Kalibrierung) und sonst gegen PS-Standards (Polystyrol-Kalibrierung).

### Klebharzerweichungstemperatur

Die Klebharzerweichungstemperatur wird nach der einschlägigen Methodik durchgeführt, die als Ring & Ball bekannt ist und nach ASTM E28 standardisiert ist.

### Dicke

Die Dicke einer Klebemasseschicht kann durch Bestimmung der Dicke eines bezüglich seiner Länge und seiner Breite definierten Abschnitts einer solchen auf einen Liner aufgetragenen Klebemassenschicht bestimmt werden, abzüglich der (bekannten oder separat ermittelbaren) Dicke eines Abschnitts gleicher Dimensionen des verwendeten Liners. Die Dicke der Klebemasseschicht lässt sich über handelsübliche Dickenmessgeräte (Taster-Prüfgeräte) mit Genauigkeiten von weniger als 1 µm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

Wie bereits die Dicke einer Klebemasseschicht lässt sich auch die Dicke eines Klebebands (Klebestreifens) bzw. eines Trägers analog über handelsübliche Dickenmessgeräte (Taster-Prüfgeräte) mit Genauigkeiten von weniger als 1 µm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

### Klebkraft

### 180° Klebkrafttest:

Zum Testen der Klebkraft der elektrisch ablösbaren Schicht D auf Stahl: Ein 20 mm breiter Streifen eines erfindungsgemäßen Klebebands wird mit der Klebmasseseite derSchicht C auf eine 23 µm dicke PET-Folie geklebt, so dass die Klebmasse etwas überragt. Der Verbund wird mit der elektrisch ablösbaren Seite (Schicht D) auf eine Stahlplatte aufgebracht, die zuvor zweimal mit Aceton und einmal mit Isopropanol gewaschen wurde. Der Haftklebestreifen wird zweimal mit einem Anpressdruck entsprechend einem Gewicht von 2 kg auf das Substrat aufgedrückt. Das Klebeband wird anschließend sofort mit einer Geschwindigkeit von 300 mm/min und in einem Winkel von 180° vom Substrat abgezogen. Alle Messungen werden bei Raumtemperatur durchgeführt.

Die Messergebnisse sind in N/cm angegeben und sind gemittelt aus drei Messungen.

Zum Testen der Klebkraft der Schicht C auf Stahl: Die Messungen werden analog durchgeführt, wobei zunächst ein 20 mm breiter Streifen eines erfindungsgemäßen Klebebands mit der elektrisch ablösbaren Klebmasseseite (Schicht D) auf eine 23 µm dicke PET-Folie geklebt wird, so dass die Klebmasse etwas überragt, und anschließend der Verbund mit der anderen Seite (Schicht C) auf eine Stahlplatte aufgebracht wird, usw.

### Erfindungsgemäßes Beispiel 1

Die Klebemasseschicht D wird folgendermaßen bereitgestellt:
Ein Basispolymer auf Basis von Acrylaten wird folgendermaßen hergestellt: Ein für radikalische Polymerisationen konventioneller Reaktor wird mit 48 kg 2-Ethylhexylacrylat, 48 kg n-Butylacrylat, 4 kg Acrylsäure und 66 kg Benzin/Aceton (70/30) befüllt. Nach 45-minütiger Durchleitung von Stickstoffgas unter Rühren wird der Reaktor auf 58 °C hochgeheizt und 50 g AIBN hinzugegeben. Anschließend wird das äußere Heizbad auf 75 °C erwärmt und die Reaktion konstant bei dieser Außentemperatur durchgeführt. Nach 1 h werden erneut 50 g AIBN zugegeben und nach 4 h wird mit 20 kg Benzin/Aceton Gemisch verdünnt. Nach 5,5 sowie nach 7 h wird jeweils mit 150 g Bis-(4-tert-butylcyclohexyl)peroxydicarbonat nachinitiiert. Nach 22 h Reaktionszeit wird die Polymerisation abgebrochen und auf Raumtemperatur abgekühlt. Das Polyacrylat hat ein mittleres Molekulargewicht von Mw = 386.000 g/mol, mit einer Polydispersität PD (Mw/Mn) =3,6.

Zu 100 Gew.-% bezogen auf die Menge des Polymers ohne Lösemittel werden 5,5 Gew.-% der ionischen Flüssigkeit 1-Ethyl-3-methylimidazolium-bis(trifluormethylsulfonyl)imid (EMIM-TFSI) und 4 Gew.-% Polyethylenglykol 400, Fa. Sigma Aldrich, versetzt.

Zusätzlich werden 0,1 Gew.-% bezogen auf die Menge des Acrylat-Polymers ohne Lösemittel von dem Vernetzer Erysis GA 240 zugegeben.

Zusätzlich werden 1 Gew.-% bezogen auf die Gesamtmenge der Klebemasse der Schicht D an Mikroballons Matsumoto FN100SSD zugegeben. Diese weisen eine Silikatbeschichtung auf und haben eine Größe von ca. 20 µm nach der Expansion.

Die erhaltene Mischung wird dann mit einem Streichbalken auf einen PET-Liner, ausgerüstet mit einem trennenden Silikon, ausgestrichen, so dass nach dem Trocknen bei 110°C eine Schichtdicke von 45 µm entsteht.

Die Klebemasseschicht C wird folgendermaßen bereitgestellt:
Das Acrylat-Basispolymer wird wie oben für die Klebemasseschicht D beschrieben hergestellt.

Es werden 0,1 Gew.-% bezogen auf die Menge des Acrylat-Polymers ohne Lösemittel von dem Vernetzer Erysis GA 240 zugegeben.

Zusätzlich werden zu der Mischung 1 Gew.-% bezogen auf die Gesamtmenge der Klebemasse an Mikroballons Matsumoto FN100SSD zugegeben.

Eine aluminisierte PET-Folie mit einer Schichtdicke von 25 µm wird als elektrisch leitfähige Trägerschicht T bereitgestellt.

Unter einer "aluminisierten PET-Folie" ist eine PET-Folie zu verstehen, die an einer Oberfläche mit Aluminium bedampft ist. Die resultierende Schichtdicke der Aluminiumschicht in z-Richtung beträgt ca. 40 nm.

Die zweite Klebemasseschicht C wird dann mit einem Streichbalken auf die nicht metallisierte Seite der PET-Folie ausgestrichen. Die resultierende Schichtdicke dieser Klebemasseschicht C beträgt dann erneut 45 µm. Die Rückseite wird mit einem Liner auf Basis eines silikonisierten PET Films eingedeckt.

Anschließend wird die elektrisch ablösbare Klebemasseschicht D auf die Aluminium-Seite des Verbundes aus Trägerschicht T und Klebmasseschicht C laminiert, so dass ein Klebeband mit der Schichtanordnung DTC resultiert.

Die Klebemasseschicht C zusammen mit der elektrisch leitfähigen Trägerschicht T überragt dabei die Klebmasseschicht D in mindestens einer Richtung, am besten um ca. 1 cm. Die Gesamtdicke des Klebebandes beträgt 115 µm.

Anschließend wird das Klebeband, das noch beidseitig mit einem silikonisierten Liner versehen ist, 1 min bei 180°C erhitzt, wodurch die Mikroballons expandieren und die Klebemasseschichten D und C somit geschäumt werden. Die Gesamtdicke des Klebebandes ohne die silikonisierten Liner beträgt dann 145 µm.

Die Klebkraft auf Stahl des Verbundes ist auf der elektrisch ablösbaren Seite, also auf der freien Fläche der Klebemasseschicht D, 4,0 N/cm, und auf der Klebmasseschicht C, 6,5 N/cm.

Zum Test der Ablösefähigkeit wird das Klebeband folgendermaßen verklebt. Die ablösbare Seite des Klebebandes wird auf eine leitfähige Oberfläche in diesem Fall eine Stahlplatte als Stellvertreter für das leitfähige Substrat A geklebt, s. auch Methodenbeschreibung "Klebkraft". Auf die gegenüberliegende Seite wird eine 23 µm dicke PET-Folie geklebt. Nach der Verklebung wird nun eine Spannung angelegt, und zwar so, dass die Kathode an die Stahlplatte angelegt wird und die Anode an den Überstand der Trägerfolie T.

Die Spannung beträgt dabei 12 V und wird für 1 min angelegt.

Anschließend wird die Probe sofort in die Messapparatur gespannt und erneut die Klebkraft der Klebemasseschicht D des Klebebandes auf der Stahlplatte gemessen. Die Klebkraft beträgt jetzt nur noch 0,5 N/cm.

Durch das Anlegen der Spannung konnte die Klebkraft deutlich reduziert werden.

### Erfindungsgemäßes Beispiel 2

In einem zweiten Beispiel wird die elektrisch ablösbare Klebmasse der Klebemasseschicht D dahingehend geändert, dass das Verhältnis der eingesetzten Acrylate verschoben wird.

Es werden 30 kg 2-Ethylhexylacrylat, 64 kg n-Butylacrylat und 6 kg Acrylsäure eingesetzt. Als ionische Flüssigkeit wird 1-Ethyl-3-methylimidazolium bis(fluorosulfonyl)imide (EMIM-FSI) in einer Menge von 5 Gew.-%, bezogen auf 100 Gew.-% bezogen auf die Menge des Polymers ohne Lösemittel, zugegeben.

Ferner werden 4 Gew.-% Polypropylenglykol 600, Fa. Sigma Aldrich, zugegeben.

Zusätzlich werden 0,1 Gew.-% bezogen auf die Menge des Acrylat-Polymers ohne Lösemittel von dem Vernetzer Erysis GA 240 zugegeben.

Wieder werden 1 Gew.-% der Mikroballons Matsumoto FN100SSD zugegeben.

Diese Masse wird mit einer Schichtdicke von 45 µm auf einen silikonisierten Liner ausgestrichen.

Als Masse der Klebemasseschicht C wird eine Masse auf Basis von Styrolblockcopolymeren eingesetzt, und zwar wird als Klebemasse eine Masse aus 33 % Kraton D1118, 17 % Kraton D1102 und 50 % Piccolyte A115 eingesetzt.

Auch dieser Klebmasse werden 1 Gew.-% Mikroballons Matsumoto FN100SSD zugegeben.

Die Masse wird mit einer resultierenden Schichtdicke von 45 µm auf eine aluminisierte PET-Folie mit einer Dicke von 25 µm als Trägerschicht T ausgestrichen, wie in Beispiel 1. Wieder wird eine silikoniserte PET-Folie als Liner auf die freie Klebemasseseite laminiert. Anschließend wird die elektrisch ablösbare Schicht D wieder auf die noch freie, metallisierte Seite der Trägerschicht T laminiert, wobei die Trägerschicht T zusammen mit der Klebemasseschicht C die ablösbare Klebmasseschicht D in mindestens einer Richtung überragt.

Das resultierende Klebeband wird wieder bei 180°C für 1 min erhitzt, um die Mikroballons in den Klebemasseschichten D und C zu expandieren. Die Gesamtdicke des Klebebandes ohne die beiden Liner beträgt 145 µm.

Das resultierende Klebeband hat auf der elektrisch ablösbaren Seite, also auf der freien Fläche der Klebemasseschicht D, eine Klebkraft auf Stahl von 3,8 N/cm und auf der anderen Seite, also auf der freien Fläche der Klebemasseschicht C, von 8,4 N/cm.

Die Verklebung zum Test der Wiederablösbarkeit wird wie oben beschrieben durchgeführt. Nach Anlegen der Spannung von 12 V für 1 min wird wieder die Klebkraft der ablösbaren Seite, also der Klebemasseschicht D, des Klebebandes auf dem Stahl gemessen: die Klebkraft sinkt auf 0,3 N/cm.

### Vergleichsbeispiel 1

Für die elektrisch ablösbare Schicht D wird die gleiche Klebmasse wie im erfindungsgemäßen Beispiel 1 verwendet, nur dass die Mikroballons ausgetauscht werden durch Mikroballons Expancel 920 DU20 der Firma Nouryon, die eine Calciumcarbonatbeschichtung aufweisen.

Die Schicht T und die Klebmasseschicht C bleiben auch unverändert zum erfindungsgemäßen Beispiel 1.

Die einzelnen Schichten werden wie oben beschrieben zusammenlaminiert und dann für 1 min auf 160°C erhitzt. Dabei zeigt sich, dass eine gleichmäßige Schäumung der Mikroballons nicht möglich ist, die Schäumung ist deutlich geringer. Im Mikroskop kann man erkennen, dass die Mikroballons schon zum großen Teil zerstört sind. Es scheint eine Unverträglichkeit der Mikroballons aufweisend eine Calciumcarbonatbeschichtung mit der ionischen Flüssigkeit zu geben.

Somit ist es überraschenderweise nur mit Mikroballons, welche eine Silikat- oder Alumosilikatbeschichtung aufweisen, gelungen eine elektrisch ablösbare und hierzu Elektrolyten enthaltende und gleichzeitig geschäumte Klebemasseschicht D herzustellen. Wie die Versuche zur Klebkraft und Wiederablösbarkeit bei den erfindungsgemäßen Beispielen 1 und 2 zeigen, ist die Klebkraft der Klebemasseschicht D an Substrate, wie Stahl, vor dem Anlegen der Spannung groß und wird erst durch das Anlegen der Spannung auf einen so geringen Wert reduziert, sodass sich die Substrate schnell und ohne großen Kraftaufwand voneinander lösen lassen.

Verwendete Substanzen:
- Kraton D1102:Styrol-Butadien-Styrol-Blockcopolymer mit dem Aufbau A-B-A und A-B im Gemisch, Styrolanteil von 30% und Diblock-Anteil (A-B) von 15 %, der Fa. Kraton
- Kraton D1118:Styrol-Butadien-Styrol-Blockcopolymer mit dem Aufbau A-B-A und A-B im Gemisch, Styrolanteil von 31% und Diblock-Anteil (A-B) von 78 %, der Fa. Kraton
- Klebharz Piccolyte A 115: Terpenharz aus alpha-Pinen, Erweichungspunkt 115°C, der Fa. DRT
- Polyethylenglykol 400, Fa. Sigma Aldrich
- Polypropylenglykol 600, Fa. Sigma Aldrich
- Erysis^{®} GA 240: Tetraglycidyl-meta-Xylenediamin, FA. Huntsman
- Mikroballons Matsumoto FN100SSD, Fa. Matsumoto
- Mikroballons Expancel 920 DU20, Fa. Nouryon

### Bezugszeichenliste

- 1: Klebemasseschicht D
- 2: elektrisch leitfähige Trägerschicht T
- 2a: freie Fläche der elektrisch leitfähigen Trägerschicht T
- 3: zweite Klebemasseschicht C
- 4: erstes Substrat A
- 5: zweites Substrat B
- 6: zweite elektrisch leitfähige Trägerschicht T'
- 6a: freie Fläche der elektrisch leitfähigen Trägerschicht T'
- 7: dritte Klebemasseschicht C'

## Patentansprüche

1. Klebeband, umfassend wenigstens folgende Schichten:
• Eine Klebemasseschicht D, wobei die Klebemasseschicht D wenigstens ein Elektrolyt enthält und geschäumt ist, wobei die Schäumung mittels Mikroballons hergestellt ist, wobei die Mikroballons an ihrer Oberfläche eine Schicht aus Silikat oder Alumosilikat aufweisen.

2. Klebeband nach Anspruch 1, **dadurch gekennzeichnet, dass** der Elektrolyt der Klebemasseschicht D ausgewählt ist aus der Gruppe bestehend aus ionischen Flüssigkeiten und Metallsalzen, wobei ionische Flüssigkeiten besonders bevorzugt sind.

3. Klebeband nach Anspruch 2, **dadurch gekennzeichnet, dass** das Anion der ionischen Flüssigkeit ausgewählt ist aus der Gruppe bestehend aus
Br⁻, AlCl₄⁻, Al₂Cl₇⁻, NO₃⁻, BF₄⁻, PF₆⁻, CH₃COO⁻, CF₃COO⁻, CF₃CO₃⁻, CF₃SO₃⁻, (CF₃SO₂)₂N⁻, (CF₃SO₂)₃C⁻, AsF₆⁻, SbF₆⁻, CF₃(CF₂)₃SO₃⁻, (CF₃CF₂SO₂)₂N⁻, CF₃CF₂CF₂COO⁻, (FSO₂)₂N⁻, und dabei besonders bevorzugt ausgewählt ist aus (CF₃SO₂)₂N⁻ und (FSO₂)₂N⁻.

4. Klebeband nach Anspruch 2 oder 3, **dadurch gekennzeichnet, dass** das Kation der ionischen Flüssigkeit ausgewählt ist aus der Gruppe bestehend aus Kationen auf Imidazolium-Basis, Kationen auf Pyridinium-Basis, Kationen auf Pyrrolidin-Basis und Kationen auf Ammonium-Basis, und dabei besonders bevorzugt ausgewählt ist aus der Gruppe bestehend aus Kationen auf Imidazolium-Basis, wobei das Kation besonders bevorzugt ausgewählt ist aus der Gruppe bestehend aus 1-Ethyl-3-methylimidazolium und 1-Butyl-3-methylimidazolium, wobei das Kation ganz besonders bevorzugt 1-Ethyl-3-methylimidazolium ist.

5. Klebeband nach einem der vorherigen Ansprüche, **dadurch gekennzeichnet, dass** der Elektrolyt der Klebemasseschicht D ausgewählt ist aus der Gruppe bestehend aus den ionischen Flüssigkeiten 1-Ethyl-3-methylimidazolium-bis(trifluormethylsulfonyl)imid (EMIM-TFSI) und 1-Ethyl-3-methylimidazolium bis(fluorsulfonyl)imid (EMIM-FSI).

6. Klebeband nach einem der vorhergehenden Ansprüche, **dadurch gekennzeichnet, dass** die erste Klebemasseschicht D poly(meth)acrylat-basiert ist.

7. Klebeband nach einem der vorhergehenden Ansprüche, **dadurch gekennzeichnet, dass** die erste Klebemasseschicht D 2 bis 10 Gew.-%, bevorzugt 4 bis 6 Gew.-%, an Elektrolyten, bevorzugt ionischen Flüssigkeiten, bezogen auf 100 Gew.-% an enthaltenen Polymeren enthält.

8. Klebeband nach einem der Ansprüche 1 bis 7, **dadurch gekennzeichnet, dass** das Klebeband ein Transferklebband ist und aus der Klebemasseschicht D besteht.

9. Klebeband nach einem der Ansprüche 1 bis 7, **dadurch gekennzeichnet, dass** es zusätzlich wenigstens die folgenden Schichten umfasst:
• Eine zweite Klebemasseschicht C; und
• wenigstens eine elektrisch leitfähige Trägerschicht T, die zwischen den Schichten D und C angeordnet ist.

10. Klebeband nach einem der Ansprüche 1 bis 7, **dadurch gekennzeichnet, dass** es zusätzlich wenigstens die folgenden Schichten umfasst:
• Eine zweite Klebemasseschicht C; und
• wenigstens eine erste elektrisch leitfähige Trägerschicht T, die zwischen den Schichten D und C angeordnet ist; und
• wenigstens eine zweite elektrisch leitfähige Trägerschicht T', die auf der der ersten elektrisch leitfähigen Trägerschicht T gegenüberliegenden Fläche der Klebemasseschicht D angeordnet ist; und
• Eine dritte Klebemasseschicht C', die auf der der ersten Klebemasseschicht D gegenüberliegenden Fläche der zweiten Trägerschicht T' angeordnet ist.

11. Klebeband nach Anspruch 9 oder 10, **dadurch gekennzeichnet, dass** die elektrisch leitfähige Trägerschicht T oder die elektrisch leitfähige erste Trägerschicht T und die elektrisch leitfähige zweite Trägerschicht T' wenigstens ein Metall umfassen, wobei das Metall ausgewählt ist aus der Gruppe bestehend aus Kupfer, Nickel, Zink, Zinn, Silber, Gold, Aluminium, Eisen, Chrom und Legierungen dieser genannten Metalle, wobei die elektrisch leitfähige erste Trägerschicht T und die elektrisch leitfähige zweite Trägerschicht T' unabhängig voneinander gleich oder verschieden voneinander sind.

12. Klebeband nach Anspruch 11, **dadurch gekennzeichnet, dass** die elektrisch leitfähige Trägerschicht T oder die elektrisch leitfähige erste Trägerschicht T und die elektrisch leitfähige zweite Trägerschicht T' a) wenigstens eine Metallfolie, bevorzugt eine Aluminiumfolie, und/oder b) wenigstens ein elektrisch leitfähiges Textil aufweisend wenigstens ein Metall, bevorzugt ausgewählt aus der Gruppe bestehend aus Kupfer und Nickel, und/oder c) eine oder mehrere Lagen wenigstens eines aufgedampften Metalls, bevorzugt ausgewählt aus der Gruppe bestehend aus Kupfer und Aluminium, und/oder d) wenigstens ein Gitter aus Metall und/oder e) eine mit Metall bedampfte Folie aufweisen, wobei die elektrisch leitfähige erste Trägerschicht T und die elektrisch leitfähige zweite Trägerschicht T' unabhängig voneinander gleich oder verschieden voneinander sind.

13. Verklebter Verbund umfassend wenigstens folgende Schichten:
• Ein erstes Substrat A; und
• Ein zweites Substrat B; und
• Ein Klebeband nach einem der Ansprüche 1 bis 12, welches zwischen dem Substrat A und dem Substrat B angeordnet ist und die Substrate A und B miteinander verklebt.

14. Verfahren zum elektrischen Lösen des Verbundes nach Anspruch 13, umfassend wenigstens folgende Verfahrensschritte:
i.) Anlegen einer Spannung an zwei verschiedenen Stellen des Verbundes, wobei die Spannung bevorzugt 2 bis 20 V, besonders bevorzugt 3 bis 15 V beträgt.

15. Verwendung des Klebebands gemäß einem der Ansprüche 1 bis 12 zur Verklebung von Bauteilen in elektronischen Geräten, Automobilen, medizinischen Geräten und zahnmedizinischen Geräten.
